(19) **Europäisches Patentamt**
**European Patent Office**
**Office européen des brevets**

(11) **EP 3 094 023 B1**

(12) **EUROPEAN PATENT SPECIFICATION**

(45) Date of publication and mention
of the grant of the patent:
**01.08.2018 Bulletin 2018/31**

(51) Int Cl.:
*H04J 11/00* (2006.01)  *H04B 7/26* (2006.01)
*H04L 5/00* (2006.01)

(21) Application number: **14878043.0**

(22) Date of filing: **09.01.2014**

(86) International application number:
**PCT/KR2014/000240**

(87) International publication number:
**WO 2015/105208 (16.07.2015 Gazette 2015/28)**

(54) **METHOD AND APPARATUS FOR CONSTRUCTING FRAME STRUCTURE IN WIRELESS ACCESS SYSTEM SUPPORTING FDR TRANSMISSION**

VERFAHREN UND VORRICHTUNG ZUR HERSTELLUNG EINER RAHMENSTRUKTUR IN DRAHTLOSZUGANGSSYSTEM MIT UNTERSTÜTZUNG VON FDR-ÜBERTRAGUNG

PROCÉDÉ ET APPAREIL POUR CRÉER UNE STRUCTURE DE TRAME DANS UN SYSTÈME D'ACCÈS SANS FIL PRENANT EN CHARGE LA TRANSMISSION FDR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.11.2016 Bulletin 2016/46**

(73) Proprietor: **LG Electronics Inc.**
**Yeongdeungpo-gu**
**Seoul 07336 (KR)**

(72) Inventors:
• **CHOI, Kukheon**
**Seoul 137-130 (KR)**
• **KIM, Jinmin**
**Seoul 137-130 (KR)**
• **NOH, Kwangseok**
**Seoul 137-130 (KR)**
• **CHUNG, Jaehoon**
**Seoul 137-130 (KR)**
• **KIM, Kitae**
**Seoul 137-130 (KR)**

(74) Representative: **Ter Meer Steinmeister & Partner**
**Patentanwälte mbB**
**Nymphenburger Straße 4**
**80335 München (DE)**

(56) References cited:
KR-A- 20090 112 561    KR-A- 20130 058 567
KR-A- 20130 075 620    KR-A- 20130 075 620
US-A1- 2012 155 336    US-A1- 2013 194 984
US-A1- 2016 330 011

• POTEVIO: "Discussion on PUSCH timing in TDD-FDD CA", 3GPP DRAFT; R1-135443, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, USA; 20131111 - 20131115 13 November 2013 (2013-11-13), XP050735116, Retrieved from the Internet: URL:http://www.3gpp.org/ftp/Meetings_3GPP_SYNC/RAN/RAN1/Docs/ [retrieved on 2013-11-13]
• NOKIA ET AL: "On TDD-FDD carrier aggregation", 3GPP DRAFT; R1-134521, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717623, Retrieved from the Internet: URL:http://www.3gpp.org/ftp/tsg_ran/WG1_RL 1/TSGR1_74b/Docs/ [retrieved on 2013-09-28]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

The present invention relates to a radio access system supportive of a full duplex radio (FDR) transmission environment, and more particularly, to various signal transmitting methods, frame structure configuring method and apparatus for supporting the same, suitable for preventing control information from being lost by interference in uplink/downlink on an FDR transmission.

## BACKGROUND ART

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

A method for providing a physical uplink shared channel/physical hybrid ARQ indicator channel (PUSCH/PHICH) scheduling timing in an inter-band TDD transmission mode and a device thereof are used to supply an optimal PUSCH/PHICH timing to all inter-band carrier aggregation (CA) terminals by suggesting a reference PUSCH/PHICH timing commonly used regardless of characteristics of a terminal. According to KR 2013 00756 20 A, a transmitting unit transmits indication information to a user terminal. The indication information indicates a selected reference PUSCH/PHICH scheduling timing. The transmitting unit allocates an uplink to the user terminal according to the reference PUSCH/PHICH scheduling timing. The transmitting unit transmits a PHICH to the user terminal. A receiving unit receives the uplink from the user terminal according to the reference PUSCH/PHICH scheduling timing.

## DISCLOSURE OF THE INVENTION

## TECHNICAL TASKS

One technical task of the present invention is to provide a method of transceiving data efficiently in a radio access system supportive of an FDR transmission.

Another technical task of the present invention is to provide a structure for minimizing interference on an FDR transmission.

Further technical task of the present invention is to provide a signal transceiving method for minimizing interference on an FDR transmission.

Another further technical task of the present invention is to provide an apparatus for supporting such methods.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTIONS

The present invention relates to a radio access system supportive of an FDR (full duplex radio) transmission environment, and more particularly, to various signal transmitting methods, frame structure configuring method and apparatus for supporting the same, suitable for preventing control information from being lost by interference in uplink/downlink on FDR transmission.

The above identified objective is solved by the features of the independent claims. Advantageous embodiments can be derived from the respective dependent claims. The invention is defined by the appended claims. The embodiments that do not fall under the scope of the claims have to be interpreted as examples useful for understanding the invention.

## ADVANTAGEOUS EFFECTS

According to embodiments of the present invention, the following effects and/or features are provided.

First of all, data can be efficiently transceived in a radio access system supportive of an FDR transmission.

Secondly, using a frame structure proposed by the present invention, it is able to minimize interference on an FDR transmission.

The afore-described aspects of the present disclosure are merely a part of embodiments of the present disclosure. Those skilled in the art will derive and understand various embodiments reflecting the technical features of the present disclosure from the following detailed description of the present disclosure.

## DESCRIPTION OF DRAWINGS

The accompanying drawings, which are included to provide a further understanding of the invention, illustrate embodiments of the invention and together with the description serve to explain the principle of the invention. In the drawings:

FIG. 1 illustrates physical channels and a general signal transmission method using the physical channels, which may be used in embodiments of the present disclosure;
FIG. 2 illustrates radio frame structures used in embodiments of the present disclosure;
FIG. 3 illustrates a structure of a DownLink (DL) resource grid for the duration of one DL slot, which may be used in embodiments of the present disclosure;
FIG. 4 illustrates a structure of an UpLink (UL) subframe, which may be used in embodiments of the present disclosure;
FIG. 5 illustrates a structure of a DL subframe, which may be used in embodiments of the present disclosure;
FIG. 6 is a diagram for example of a physical channel structure in a downlink subframe used in a radio access system;
FIG. 7 is a diagram for one of methods of transmitting an ACK/NACK signal for uplink data in an LTE system;
FIG. 8 is a diagram for one example of a PHICH signal processing procedure/block used in a radio access system;
FIG. 9 is a diagram for one example of a channel coding block for HI;
FIG. 10 shows one example of allocating in a control region according to Table 7;
FIG. 11 shows a subframe structure of an LTE-A system according to cross carrier scheduling used in embodiments of the present invention;
FIG. 12 is a diagram for one example of an FDR scheme;
FIG. 13 is a diagram for one of user equipment capability negotiation procedures for an FDR transmission between a user equipment and a network;
FIG. 14 is a diagram for one example of self-interference in a downlink FDR transmission;
FIG. 15 is a diagram for one example of a frame structure for an FDD-based downlink FDR transmission;
FIG. 16 is a diagram for one example of a frame structure for a TDD-based downlink FDR transmission;
FIG. 17 is a diagram for another example of a frame structure for an FDD-based downlink FDR transmission;
FIG. 18 is a diagram to illustrate self-interference in a CA environment;
FIG. 19 is a diagram for one example of a frame structure for an FDR transmission in a CA situation;
FIG. 20 is a diagram for one example of self-interference in an uplink FDR transmission;
FIG. 21 is a diagram for one example of a frame structure for an FDD-based uplink FDR transmission;
FIG. 22 is a diagram for one example of a frame structure for a TDD-based uplink FDR transmission;
FIG. 23 is a diagram for another example of frame arrangement for an FDD-based uplink FDR transmission;
FIG. 24 is a diagram for further example of frame arrangement for an FDD-based uplink FDR transmission;
FIG. 25 shows a means for implementing the methods described with reference to FIGs. 1 to 24; and
FIG. 26 is a diagram to illustrate one of methods for configuring a frame structure in a base station supportive of an FDR transmission.

## BEST MODE FOR INVENTION

The present invention relates to a radio access system supportive of FDR (full duplex radio) transmission environment, and more particularly, to various signal transmitting methods, frame structure configuring method and apparatus for supporting the same, suitable for preventing control information from lost by interference in uplink/downlink on an FDR transmission.

In the description of the attached drawings, a detailed description of known procedures or steps of the present disclosure will be avoided lest it should obscure the subject matter of the present disclosure. In addition, procedures or steps that could be understood to those skilled in the art will not be described either.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on an UpLink (UL). Likewise, the UE may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present disclosure may be supported by the standard specifications, 3GPP TS 36.211, 3GPP TS 36.212, 3GPP TS 36.213, and 3GPP TS 36.321. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the invention.

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802.16e/m system, etc.

**1. 3GPP LTE/LTE-A System**

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

**1.1 System Overview**

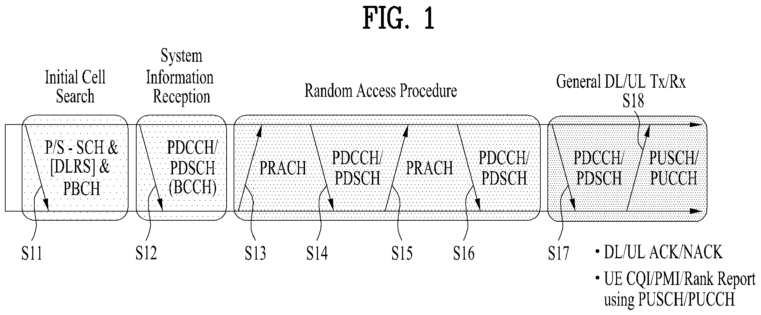

FIG. 1 illustrates physical channels and a general method using the physical channels, which may be used in embodiments of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB. During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

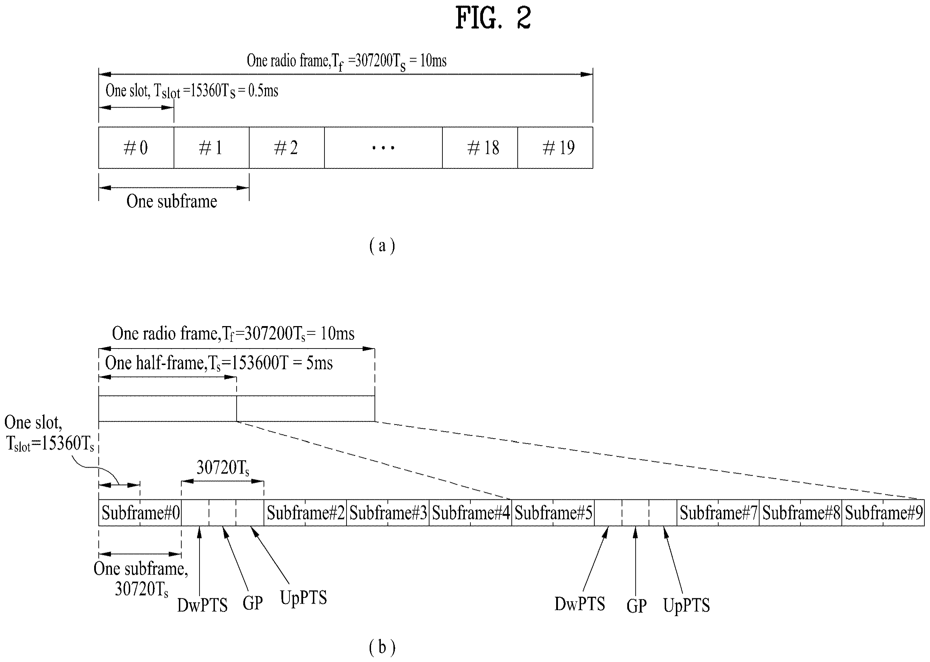

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms ($T_f$=307200·$T_s$) long, including equal-sized 20 slots indexed from 0 to 19. Each slot is 0.5ms ($T_{slot}$=15360·$T_s$) long. One subframe includes two successive slots. An $i_{th}$ subframe includes $2i_{th}$ and $(2i+1)_{th}$ slots. That is, a radio frame includes 10 subframes. A time required for transmitting one subframe is defined as a Transmission Time Interval (TTI). Ts is a sampling time given as $T_s$=1/(15kHzx2048)=3.2552x10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms ($T_f$=307200·$T_s$) long, including two half-frames each having a length of 5ms (=153600·Ts) long. Each half-frame includes five subframes each being 1ms (=30720·$T_s$) long. An $i_{th}$ subframe includes 2ith and $(2i+1)_{th}$ slots each having a length of 0.5ms ($T_{slot}$=15360·$T_s$). Ts is a sampling time given as $T_s$=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

[Table 1] below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | - | - | - |
| 8 | $24144 \cdot T_s$ | | | - | - | - |

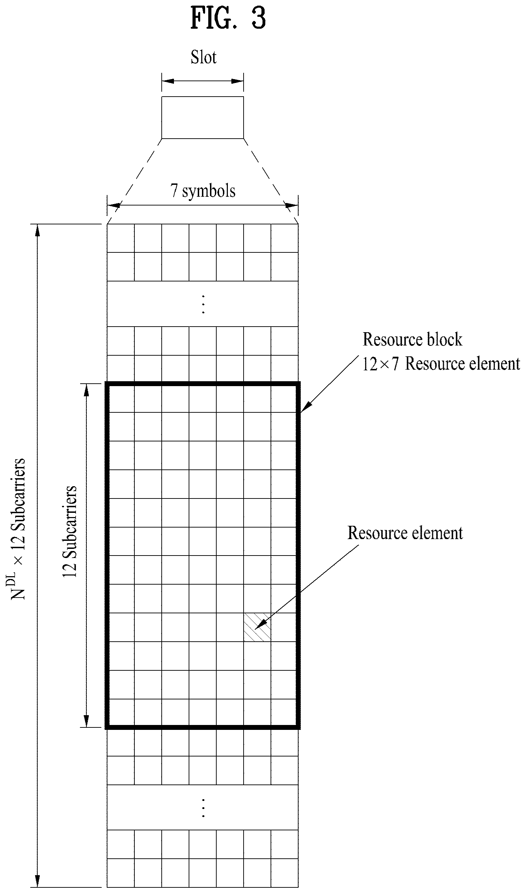

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth. A UL slot may have the same structure as a DL slot.

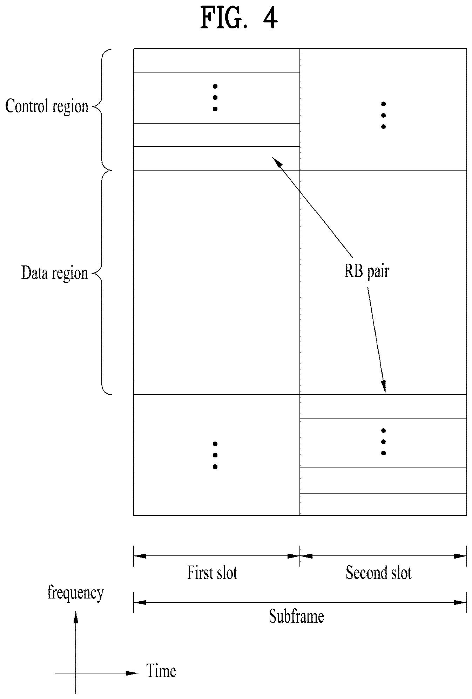

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe is allocated to a PUCCH for a UE. The RBs of the RB pair occupy different subcarriers in two slots. Thus it is said that the RB pair frequency-hops over a slot boundary.

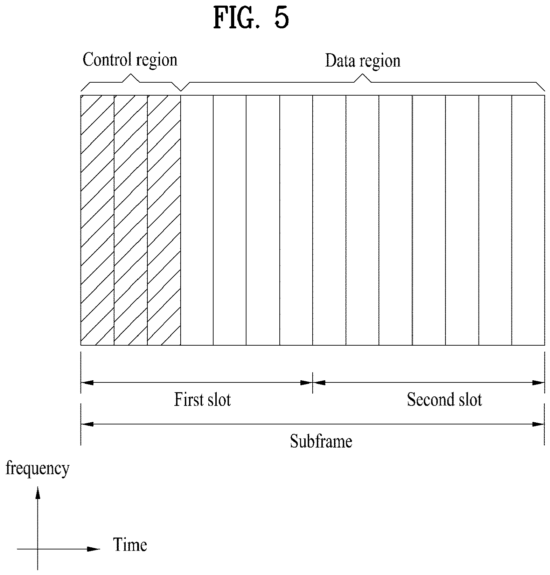

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

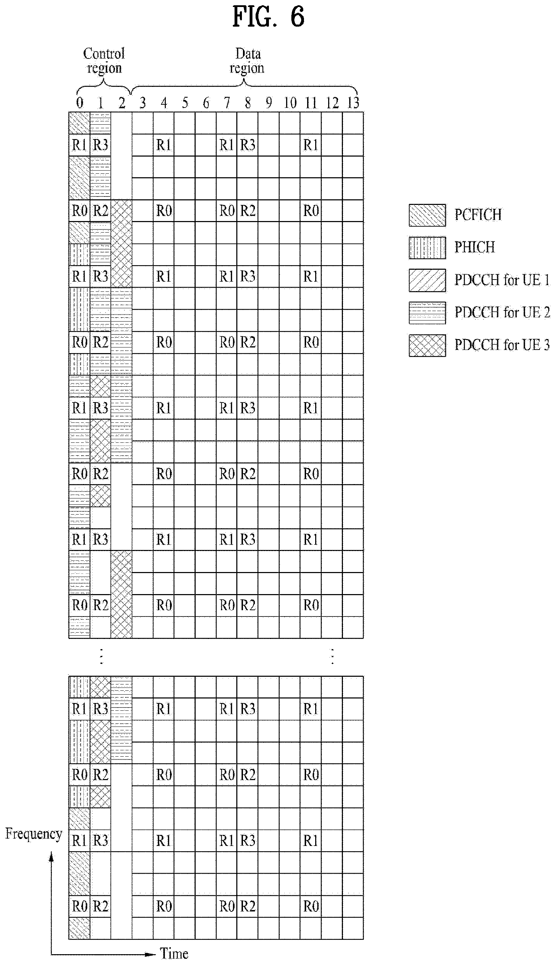

FIG. 6 illustrates the structures of physical channels in a downlink subframe used in wireless access system.

Referring to FIG. 6, the control region is started from the first OFDMA symbol of the subframe and includes one or more OFDMA symbols. The size of the control region may be independently configured with respect to each subframe. In FIG. 6, R1 to R4 denote Cell Specific RSs (CRSs) for antennas 0 to 3.

The control region includes a Physical Control Format Indicator Channel (PCFICH), a Physical Hybrid ARQ Indicator Channel (PHICH), and a Physical Downlink Control Channel (PDCCH). The data region includes a Physical Shared Channel (PDSCH). A basic resource unit constituting the control channel is a Resource Element Group (REG). The REG consists of four Resource Elements (REs) adjacent to one another while excluding Reference Signals (RSs). An RE is a minimum unit of a time-frequency resource and is defined as one subcarrier and one OFDMA symbol. The RE is indicated by an index pair of (k,l) wherein k denotes a subcarrier index and 1 denotes an OFDMA symbol index.

The PCFICH, physical control format indicator channel, informs a UE of the number of OFDMA symbols used for a PDCCH in each subframe. The PHICH carries HARQ ACK/NACK for UL data and includes three REGs.

The PHICH will be described later in detail with reference to the drawings. The PDCCH, physical downlink control channel, is assigned to the first n number of OFDM symbols of a subframe. Herein, n is an integer equal to or greater than 1, which is indicated by the PCFICH. The PDCCH is assigned in units of Control Channel Element (CCEs). One CCE includes 9 REGs. The PDCCH indicates information on resource assignment of a Paging Channel (PCH) and Downlink-Shared Channel (DL-SCH) which are transport channels, uplink scheduling grant, HARQ information, etc. The PCH and DL-SCH are transmitted through the PDSCH.

A BS and a UE generally transmit and receive data through the PDSCH except for a specific control signal or specific service data. Information indicating to which UE (one or a plurality of UEs) the data of the PDSCH is transmitted and information indicating how UEs receive and decode the data of the PDSCH is transmitted in a state of being included in the PDCCH.

For example, it is assumed that a specific PDCCH is CRC-masked with a Radio Network Temporary Identity (RNTI) "A", and information about data transmitted using a radio resource (e.g., frequency location) "B" and transmission format information (e.g., transmission block size, modulation scheme, coding information, etc.) "C" is transmitted via a specific subframe. In this case, one or more UEs located within a cell monitor the PDCCH using RNTI information thereof, and one or more UEs having "A" RNTI receive the PDCCH and receive the PDSCH indicated by "B" and "C" through the information about the received PDCCH.

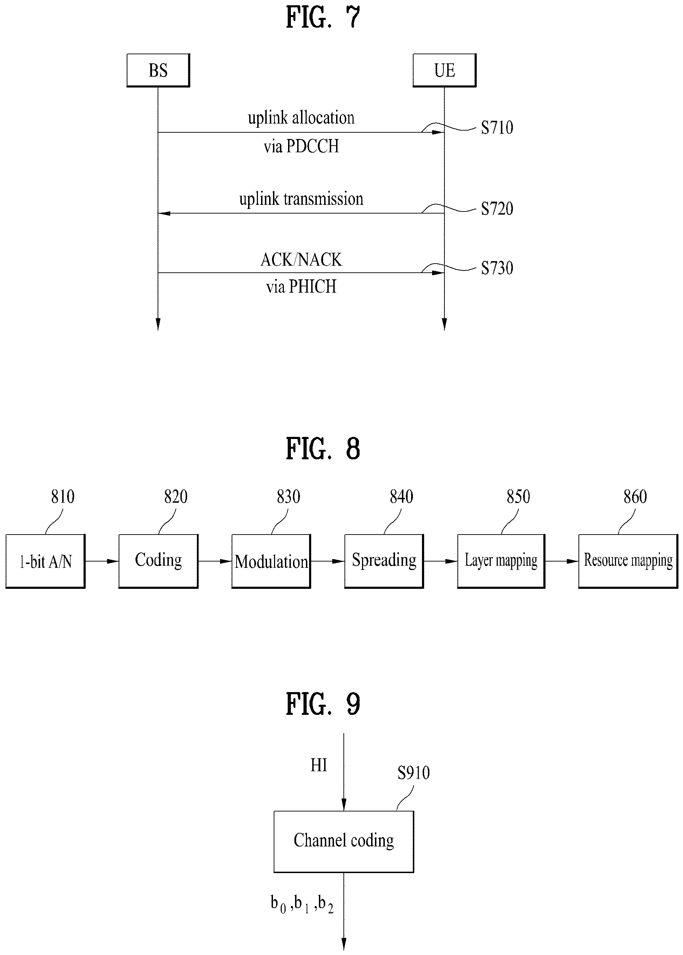

FIG. 7 illustrates a method for transmitting an ACK/NACK signal for UL data in an LTE system.

Referring to FIG. 7, a network node (e.g. BS) transmits UL allocation information to a UE via a PDCCH (S710).

Control information for UL allocation is referred to as a UL grant and includes resource block allocation information for PUSCH transmission and cyclic shift information for a Data Demodulation Reference Signal (DMRS). Next, the UE transmits UL data (e.g. a PUSCH) to the BS according to UL allocation information (S720).

The BS receives the UL data from the UE and transmits a reception response signal to the UL data to the UE via a PHICH (S730).

A plurality of PHICHs may be mapped to the same resource elements and constitutes a PHICH group. The PHICHs within the same PHICH group are distinguished through orthogonal sequences. A PHICH resource is identified by an index pair group seq group seq $\left( n_{\text{PHICH}}^{\text{group}}, n_{\text{PHICH}}^{\text{seq}} \right)$, , where $n_{\text{PHICH}}^{\text{group}}$ is a PHICH group number and $n_{\text{PHICH}}^{\text{seq}}$ is an orthogonal sequence index within the PHICH group. $n_{\text{PHICH}}^{\text{group}}$ and $n_{\text{PHICH}}^{\text{seq}}$ are identified using the lowest Physical Resource Block (PRB) index among PRB indexes allocated for PUSCH transmission and using cyclic shift of a DMRS transmitted as a UL grant. Equation 1 shows an example for acquiring $n_{\text{PHICH}}^{\text{group}}$ and $n_{\text{PHICH}}^{\text{seq}}$.

[Equation 1]

$$n_{PHICH}^{group} = (I_{PRB\_RA}^{lowest\_index} + n_{DMRS}) \bmod N_{PHICH}^{group} + I_{PHICH} N_{PHICH}^{group}$$

$$n_{PHICH}^{seq} = (\lfloor I_{PRB\_RA}^{lowest\_index} / N_{PHICH}^{group} \rfloor + n_{DMRS}) \bmod 2 N_{SF}^{PHICH}$$

where $n_{DMRS}$ is mapped from a cyclic shift value for a DMRS. $N_{SF}^{PHICH}$ denotes a spreading factor size used for PHICH modulation, $I_{PRB\_RA}^{lowest\_index}$ denotes the lowest PRB index for PUSCH transmission, $N_{PHICH}^{group}$ denotes the number of PHICH groups, and IPHICH has a value of 0 or 1 according to a type of a frame or a subframe.

Table 2 shows exemplary mapping between $n_{DMRS}$ and a cyclic shift value in a DMRS field.

[Table 2]

| Cyclic Shift for DMRS Field in DCI format 0 | $n_{DMRS}$ |
|---|---|
| 000 | 0 |
| 001 | 1 |
| 010 | 2 |
| 011 | 3 |
| 100 | 4 |

(continued)

| Cyclic Shift for DMRS Field in DCI format 0 | $n_{DMRS}$ |
|---|---|
| 101 | 5 |
| 110 | 6 |
| 111 | 7 |
| *DCI (Downlink Control Information) format 0: indicates DL control information format used for carrying UL allocation information in LTE. | |

In the case of an FDD frame (frame structure type 1), the number of PHICH groups, $N_{\text{PHICH}}^{\text{group}}$, is the same in all subframes and the number of PHICH groups in one subframe is given by Equation 2.

[Equation 2]

$$N_{\text{PHICH}}^{\text{group}} = \begin{cases} \left\lceil N_{\text{g}}\left(N_{\text{RB}}^{\text{DL}}/8\right)\right\rceil & \text{for normal cyclic prefix} \\ 2\cdot\left\lceil N_{\text{g}}\left(N_{\text{RB}}^{\text{DL}}/8\right)\right\rceil & \text{for extended cyclic prefix} \end{cases}$$

where $N_{\text{g}}\in\{1/6,1/2,1,2\}$ is provided from a higher layer and NDLRB denotes the number of RBs of a DL band.

In the case of a TDD frame (frame structure type 2), the number of PHICH groups may differ according to a DL subframe and is given by $m_i \cdot N_{\text{PHICH}}^{\text{group}}$. Table 3 shows $m_i$.

[Table 3]

| Uplink-downlink configuration | Subframe number $i$ | | | | | | | | | |
|---|---|---|---|---|---|---|---|---|---|---|
| | 0 | 1 | 2 | 3 | 4 | 5 | 6 | 7 | 8 | 9 |
| 0 | 2 | 1 | - | - | - | 2 | 1 | - | - | - |
| 1 | 0 | 1 | - | - | 1 | 0 | 1 | - | - | 1 |
| 2 | 0 | 0 | - | 1 | 0 | 0 | 0 | - | 1 | 0 |
| 3 | 1 | 0 | - | - | - | 0 | 0 | 0 | 1 | 1 |
| 4 | 0 | 0 | - | - | 0 | 0 | 0 | 0 | 1 | 1 |
| 5 | 0 | 0 | - | 0 | 0 | 0 | 0 | 0 | 1 | 0 |
| 6 | 1 | 1 | - | - | - | 1 | 1 | - | - | 1 |

FIG. 8 illustrates a PHICH signal processing process/block.

Referring to FIG. 8, a PHICH signal processing process includes ACK/NACK (A/N) generation, (channel) coding , modulation, spreading, layer mapping, and resource mapping.

The ACK/NACK generation block 810 generates a 1-bit ACK/NACK according to a decoding result of a PUSCH (corresponding to a data stream, codeword, or transport block) received from a UE. Since an LTE system does not use Single User Multiple Input Multiple Output (SU-MIMO) in UL, only a 1-bit ACK/NACK for PUSCH transmission of one UE, i.e. for a single data stream, is transmitted through a PHICH. Hereinafter, the 1-bit ACK/NACK generated from the ACK/NACK generation block 810 will be referred to as a HARQ Indicator (HI).

FIG. 9 illustrates a channel coding block for an HI.

Referring to FIGs. 8 and 9, coding blocks 820 and 910 of legacy LTE generate a 3-bit HI codeword (b0,b1,b2) using repetition coding at a code rate 1/3 from a 1-bit HI. An HI of 1 indicates positive acknowledgement and an HI of 0 indicates negative acknowledgement, or vice versa.

Table 4 shows the relationship between an HI and an HI codeword in legacy LTE.

[Table 4]

| HI | HI codeword $< b_0, b_1, b_2 >$ |
|---|---|
| 0 | $< 0,0,0 >$ |
| 1 | $< 1,1,1 >$ |

Next, the modulation block 830 modulates a bit block $b(0),...,b(M_{bit}-1)$ (i.e. HI codeword) transmitted over one PHICH into a modulation symbol block $z(0),...,z(M_s-1)$ having a complex value. In an LTE system, the PHICH is modulated using Binary Phase Shift Keying (BPSK).

The spreading block 840 spreads the modulation symbol block $z(0),...,z(M_s-1)$ symbol-wise by multiplying the modulation symbol by an orthogonal sequence and applies scrambling, thereby generating a modulation symbol sequence $d(0),...,d(M_{symb}-1)$. Equation 3 indicates a processing process of the spreading block 608.

[Equation 3]

$$ d(i) = w\left(i \bmod N_{\mathrm{SF}}^{\mathrm{PHICH}}\right) \cdot \left(1 - 2c(i)\right) \cdot z\left(\left\lfloor i / N_{\mathrm{SF}}^{\mathrm{PHICH}} \right\rfloor\right) $$

$$ M_{\mathrm{symb}} = N_{\mathrm{SF}}^{\mathrm{PHICH}} \cdot M_s \qquad , \qquad N_{\mathrm{SF}}^{\mathrm{PHICH}} = \begin{cases} 4 & \text{normal cyclic prefix} \\ 2 & \text{extended cyclic prefix} \end{cases} $$

where $i=0,...,M_{symb}-1$, , , and $c(i)$ denotes a cell-specific scrambling sequence. A scrambling sequence generator may be initialized to

$$ c_{\mathrm{init}} = \left(\left\lfloor n_s / 2 \right\rfloor + 1\right) \cdot \left(2 N_{\mathrm{ID}}^{\mathrm{cell}} + 1\right) \cdot 2^9 + N_{\mathrm{ID}}^{\mathrm{cell}} $$

in every subframe, where ns denotes a subframe index and NcellID denotes a cell identifier.

The sequence $\left[ w(0) \quad \cdots \quad w(N_{\mathrm{SF}}^{\mathrm{PHICH}} - 1) \right]$ denotes an orthogonal sequence for a seq PHICH and the sequence index $n_{\mathrm{PHICH}}^{\mathrm{seq}}$ corresponds to a PHICH number within a PHICH group.

Table 5 indicates the spreading sequence $\left[ w(0) \quad \cdots \quad w(N_{\mathrm{SF}}^{\mathrm{PHICH}} - 1) \right]$.

[Table 5]

| Sequence index $n_{\mathrm{PHICH}}^{\mathrm{seq}}$ | Orthogonal sequence | |
|---|---|---|
| | Normal cyclic prefix $N_{\mathrm{SF}}^{\mathrm{PHICH}} = 4$ | Extended cyclic prefix $N_{\mathrm{SF}}^{\mathrm{PHICH}} = 2$ |
| 0 | [+1 +1 +1 +1] | [+1 +1] |
| 1 | [+1 -1 +1 -1] | [+1 -1] |
| 2 | [+1 +1 -1 -1] | [+ $j$ +$j$] |
| 3 | [+1 -1 -1 +1] | [+$j$ -$j$] |
| 4 | [+$j$ +$j$ +$j$ +$j$] | - |
| 5 | [+$j$ -$j$ +$j$ -$j$] | - |
| 6 | [+$j$ +$j$ -$j$ -$j$] | - |
| 7 | [+$j$ -$j$ -$j$ +$j$] | - |

The layer mapping block 610 performs resource group arrangement, layer mapping, and precoding. Resource group arrangement indicates arrangement of the spread modulation symbol sequence $d(0),...,d(M_{symb}-1)$ in the unit of an REG to provide a symbol block $d^{(0)}(0),...,d^{(0)}(c \cdot M_{symb}-1)$. In the case of a normal Cyclic Prefix (CP), $c=1$ and, in the case of an extended CP, $c=2$. Equation 4 shows a method for performing resource group arrangement.

[Equation 4]

In a normal CP case: $d^{(0)}(i) = d(i)$, for $i = 0,...,M_{symb} - 1$

In an extended CP case:

$$\left[d^{(0)}(4i) \quad d^{(0)}(4i+1) \quad d^{(0)}(4i+2) \quad d^{(0)}(4i+3)\right]^T = \begin{cases} \left[d(2i) \quad d(2i+1) \quad 0 \quad 0\right]^T & n_{PHICH}^{group} \bmod 2 = 0 \\ \left[0 \quad 0 \quad d(2i) \quad d(2i+1)\right]^T & n_{PHICH}^{group} \bmod 2 = 1 \end{cases}$$

, for $i = 0,...,(M_{symb}/2) - 1$

Next, the symbol block $d^{(0)}(0),...,d^{(0)}(c \cdot M_{symb}-1)$ is converted into a vector block $y(i)=[y^{(0)}(i) ... y^{(P-1)}(i)]^T$ ($i=0,...,c \cdot M_{symb}-1$) through layer mapping and precoding, where $y^{(p)}(i)$ denotes a signal for an antenna port $p(p=0,...,P-1)$. In LTE, the number of antenna ports for a cell-specific reference signal is $P \in \{1,2,4\}$. Layer mapping and precoding depend on the length of a CP and the number of antenna ports used for PHICH transmission.

If a PHICH is transmitted through a single antenna port ($P$=1), layer mapping and precoding are performed using Equation 5 and Equation 6, respectively.

[Equation 5]

$$x^{(0)}(i) = d^{(0)}(i)$$

[Equation 6]

$$y^{(p)}(i) = x^{(0)}(i)$$

In Equation 5 and Equation 6, $i = 0,1,...,M_{symb}^{layer} - 1$, $M_{symb}^{layer} = M_{symb}^{(0)}/2$, and $M_{symb}^{(0)} = c \cdot M_{symb}$. In a normal CP, $c$=1 and, in an extended CP, $c$=2. p denotes the number of antenna ports.

If a PHICH is transmitted through two antenna ports ($P$=2), layer mapping and precoding are performed using Equation 7 and Equation 8, respectively.

[Equation 7]

$$x^{(0)}(i) = d^{(0)}(2i)$$
$$x^{(1)}(i) = d^{(0)}(2i+1)$$

[Equation 8]

$$\begin{bmatrix} y^{(0)}(2i) \\ y^{(1)}(2i) \\ y^{(0)}(2i+1) \\ y^{(1)}(2i+1) \end{bmatrix} = \frac{1}{\sqrt{2}} \begin{bmatrix} 1 & 0 & j & 0 \\ 0 & -1 & 0 & j \\ 0 & 1 & 0 & j \\ 1 & 0 & -j & 0 \end{bmatrix} \begin{bmatrix} Re(x^{(0)}(i)) \\ Re(x^{(1)}(i)) \\ Im(x^{(0)}(i)) \\ Im(x^{(1)}(i)) \end{bmatrix}$$

In Equation 7 and Equation 8, $i = 0,1,...,M_{symb}^{layer} - 1$, $M_{symb}^{layer} = M_{symb}^{(0)}/2$, and $M_{symb}^{(0)} = c \cdot M_{symb}$. c=1 in case of normal CP and c=2 in case of extended CP.

If a PHICH is transmitted through four antenna ports ($P$=4), layer mapping and precoding are performed using Equation 10 and Equation 11, respectively.

[Equation 9]

$$x^{(0)}(i) = d^{(0)}(4i)$$

$$x^{(1)}(i) = d^{(0)}(4i+1)$$

$$x^{(2)}(i) = d^{(0)}(4i+2)$$

$$x^{(3)}(i) = d^{(0)}(4i+3)$$

$$M_{\text{symb}}^{\text{layer}} = \begin{cases} M_{\text{symb}}^{(0)} \big/ 4 & \text{if } M_{\text{symb}}^{(0)} \bmod 4 = 0 \\ \left( M_{\text{symb}}^{(0)} + 2 \right) \big/ 4 & \text{if } M_{\text{symb}}^{(0)} \bmod 4 \neq 0 \end{cases}$$

In Equation 9, if $\quad$ and $\quad M_{\text{symb}}^{(0)} \bmod 4 \neq 0 \quad$ , 2 null symbols are added to $d^{(0)}(M_{\text{symb}}^{(0)} - 1)$ .

[Equation 10]

$$\begin{bmatrix} y^{(0)}(4i) \\ y^{(1)}(4i) \\ y^{(2)}(4i) \\ y^{(3)}(4i) \\ y^{(0)}(4i+1) \\ y^{(1)}(4i+1) \\ y^{(2)}(4i+1) \\ y^{(3)}(4i+1) \\ y^{(0)}(4i+2) \\ y^{(1)}(4i+2) \\ y^{(2)}(4i+2) \\ y^{(3)}(4i+2) \\ y^{(0)}(4i+3) \\ y^{(1)}(4i+3) \\ y^{(2)}(4i+3) \\ y^{(3)}(4i+3) \end{bmatrix} = \frac{1}{\sqrt{2}} \begin{bmatrix} 1 & 0 & 0 & 0 & j & 0 & 0 & 0 \\ 0 & 0 & 0 & 0 & 0 & 0 & 0 & 0 \\ 0 & -1 & 0 & 0 & 0 & j & 0 & 0 \\ 0 & 0 & 0 & 0 & 0 & 0 & 0 & 0 \\ 0 & 1 & 0 & 0 & 0 & j & 0 & 0 \\ 0 & 0 & 0 & 0 & 0 & 0 & 0 & 0 \\ 1 & 0 & 0 & 0 & -j & 0 & 0 & 0 \\ 0 & 0 & 0 & 0 & 0 & 0 & 0 & 0 \\ 0 & 0 & 1 & 0 & 0 & 0 & j & 0 \\ 0 & 0 & 0 & 0 & 0 & 0 & 0 & 0 \\ 0 & 0 & 0 & -1 & 0 & 0 & 0 & j \\ 0 & 0 & 0 & 0 & 0 & 0 & 0 & 0 \\ 0 & 0 & 0 & 1 & 0 & 0 & 0 & j \\ 0 & 0 & 0 & 0 & 0 & 0 & 0 & 0 \\ 0 & 0 & 1 & 0 & 0 & 0 & -j & 0 \\ 0 & 0 & 0 & 0 & 0 & 0 & 0 & 0 \end{bmatrix} \begin{bmatrix} \text{Re}\!\left(x^{(0)}(i)\right) \\ \text{Re}\!\left(x^{(1)}(i)\right) \\ \text{Re}\!\left(x^{(2)}(i)\right) \\ \text{Re}\!\left(x^{(3)}(i)\right) \\ \text{Im}\!\left(x^{(0)}(i)\right) \\ \text{Im}\!\left(x^{(1)}(i)\right) \\ \text{Im}\!\left(x^{(2)}(i)\right) \\ \text{Im}\!\left(x^{(3)}(i)\right) \end{bmatrix}$$

[Equation 11]

$$
\begin{bmatrix}
y^{(0)}(4i) \\
y^{(1)}(4i) \\
y^{(2)}(4i) \\
y^{(3)}(4i) \\
y^{(0)}(4i+1) \\
y^{(1)}(4i+1) \\
y^{(2)}(4i+1) \\
y^{(3)}(4i+1) \\
y^{(0)}(4i+2) \\
y^{(1)}(4i+2) \\
y^{(2)}(4i+2) \\
y^{(3)}(4i+2) \\
y^{(0)}(4i+3) \\
y^{(1)}(4i+3) \\
y^{(2)}(4i+3) \\
y^{(3)}(4i+3)
\end{bmatrix}
= \frac{1}{\sqrt{2}}
\begin{bmatrix}
0 & 0 & 0 & 0 & 0 & 0 & 0 & 0 \\
1 & 0 & 0 & 0 & j & 0 & 0 & 0 \\
0 & 0 & 0 & 0 & 0 & 0 & 0 & 0 \\
0 & -1 & 0 & 0 & 0 & j & 0 & 0 \\
0 & 0 & 0 & 0 & 0 & 0 & 0 & 0 \\
0 & 1 & 0 & 0 & 0 & j & 0 & 0 \\
0 & 0 & 0 & 0 & 0 & 0 & 0 & 0 \\
1 & 0 & 0 & 0 & -j & 0 & 0 & 0 \\
0 & 0 & 0 & 0 & 0 & 0 & 0 & 0 \\
0 & 0 & 1 & 0 & 0 & 0 & j & 0 \\
0 & 0 & 0 & 0 & 0 & 0 & 0 & 0 \\
0 & 0 & 0 & -1 & 0 & 0 & 0 & j \\
0 & 0 & 0 & 0 & 0 & 0 & 0 & 0 \\
0 & 0 & 0 & 1 & 0 & 0 & 0 & j \\
0 & 0 & 0 & 0 & 0 & 0 & 0 & 0 \\
0 & 0 & 1 & 0 & 0 & 0 & -j & 0
\end{bmatrix}
\begin{bmatrix}
\operatorname{Re}\!\left(x^{(0)}(i)\right) \\
\operatorname{Re}\!\left(x^{(1)}(i)\right) \\
\operatorname{Re}\!\left(x^{(2)}(i)\right) \\
\operatorname{Re}\!\left(x^{(3)}(i)\right) \\
\operatorname{Im}\!\left(x^{(0)}(i)\right) \\
\operatorname{Im}\!\left(x^{(1)}(i)\right) \\
\operatorname{Im}\!\left(x^{(2)}(i)\right) \\
\operatorname{Im}\!\left(x^{(3)}(i)\right)
\end{bmatrix}
$$

In the case of $(i + n_{\text{PHICH}}^{\text{group}}) \bmod 2 = 0$ (normal CP) or $\left(i + \left\lfloor n_{\text{PHICH}}^{\text{group}}/2 \right\rfloor\right) \bmod 2 = 0$ (extended CP), Equation 10 is used and, in the other cases, Equation 11 is used. $n_{\text{PHICH}}^{\text{group}}$ is a PHICH group number and $i$=0,1,2.

Referring back to Fig. 8, the resource mapping block 860 performs various operations for mapping the spread symbol sequence received from the layer mapping block 850 to a physical resource. A sequence $\overline{y}^{(p)}(0),\dots,\overline{y}^{(p)}(M_{\text{symb}}^{(0)} - 1)$ for each PHICH group is defined as indicated by Equation 12.

[Equation 12]

$$
\overline{y}^{(p)}(n) = \sum_i y_i^{(p)}(n)
$$

where sum is performed with respect to all PHICHs within a PHICH group, $y_i^{(p)}(n)$ denotes a symbol sequence of an i-th PHICH within a PHICH group, and p is an antenna port.

Thereafter, a PHICH group is mapped to a PHICH mapping unit. Mapping between a PHICH group m and a PHICH mapping unit m' is performed according to Equation 13 and Equation 14. Equation 13 corresponds to a normal CP case and Equation 14 corresponds to an extended CP case.

[Equation 13]

$$
\tilde{y}_{m'}^{(p)}(n) = \overline{y}_m^{(p)}(n)
$$

where $m' = m = \begin{cases} 0,1,\dots, N_{\text{PHICH}}^{\text{group}} - 1 & \text{for frame structure type 1} \\ 0,1,\dots, m_i \cdot N_{\text{PHICH}}^{\text{group}} - 1 & \text{for frame structure type 2} \end{cases}$ and $m_i$ is shown in Table 3.

[Equation 14]

$$\tilde{y}_{m'}^{(p)}(n) = \bar{y}_m^{(p)}(n) + \bar{y}_{m+1}^{(p)}(n)$$

where $m = \begin{cases} 0,2,\ldots,N_{\text{PHICH}}^{\text{group}} - 2 & \text{for frame structure type 1} \\ 0,2,\ldots,m_i \cdot N_{\text{PHICH}}^{\text{group}} - 2 & \text{for frame structure type 2} \end{cases}$ and $m_i$ is shown in Table 2. In the extended CP, two PHICH groups m and m+1 correspond to one PHICH mapping unit $m'$.

For resource mapping, $z^{(p)}(i)=\langle \tilde{y}^{(p)}(4i), \tilde{y}^{(p)}(4i+1), \tilde{y}^{(p)}(4i+2), \tilde{y}^{(p)}(4i+3)\rangle$ (where $i=0,1,2$) is referred to as a symbol quadruplet i for an antenna port p. Mapping of a PHICH mapping unit to resource elements is performed in units of a symbol quadruplet.

Table 6 shows mapping of a PHICH mapping unit to resource elements.

[Table 6]

| |
|---|
| 1) For each value of $l'$ |
| 2) Let $n_{l'}$ denote the number of resource element groups not assigned to PCFICH in OFDM symbol $l'$ |
| 3) Number the resource-element groups not assigned to PCFICH in OFDM symbol $l'$ from 0 to $n_{l'}$ -1, starting from the resource-element group with the lowest frequency-domain index. |
| 4) Initialize $m'=0$ (PHICH mapping unit number) |
| 5) For each value of $i = 0,1,2$ |
| 6) Symbol-quadruplet $z^{(p)}(i)$ from PHICH mapping unit $m'$ is mapped to the resource-element group represented by $(k',l')_i$ where the indices $\hat{k}_i'$ and $l_i'$ are given by steps 7 and 8 below: |
| 7) The time-domain index $l_i'$ is given by <br><br> $l_i' = \begin{cases} 0 & \text{normal PHICH duration, all subframes} \\ (\lfloor m'/2 \rfloor + i + 1) \bmod 2 & \text{extended PHICH duration, MBSFN subframes} \\ (\lfloor m'/2 \rfloor + i + 1) \bmod 2 & \text{extended PHICH duration, subframe 1 and 6 in frame structu} \\ i & \text{otherwise} \end{cases}$ |
| 8) Set the frequency-domain index $k_i'$ to the resource-element group assigned the number $\bar{n}_i$ in step 3 above, where $\bar{n}_i$ is given by <br><br> $\bar{n}_i = \begin{cases} (\lfloor N_{\text{ID}}^{\text{cell}} \cdot n_{l_i'}/n_1 \rfloor + m') \bmod n_{l_i'} & i = 0 \\ (\lfloor N_{\text{ID}}^{\text{cell}} \cdot n_{l_i'}/n_1 \rfloor + m' + \lfloor n_{l_i'}/3 \rfloor) \bmod n_{l_i'} & i = 1 \\ (\lfloor N_{\text{ID}}^{\text{cell}} \cdot n_{l_i'}/n_1 \rfloor + m' + \lfloor 2 n_{l_i'}/3 \rfloor) \bmod n_{l_i'} & i = 2 \end{cases}$ <br><br> in case of extended PHICH duration in MBSFN subframes, or extended PHICH duration in subframes 1 and 6 for frame structure type 2 and by <br><br> $\bar{n}_i = \begin{cases} (\lfloor N_{\text{ID}}^{\text{cell}} \cdot n_{l_i'}/n_0 \rfloor + m') \bmod n_{l_i'} & i = 0 \\ (\lfloor N_{\text{ID}}^{\text{cell}} \cdot n_{l_i'}/n_0 \rfloor + m' + \lfloor n_{l_i'}/3 \rfloor) \bmod n_{l_i'} & i = 1 \\ (\lfloor N_{\text{ID}}^{\text{cell}} \cdot n_{l_i'}/n_0 \rfloor + m' + \lfloor 2 n_{l_i'}/3 \rfloor) \bmod n_{l_i'} & i = 2 \end{cases}$ <br><br> otherwise. |

Table 7 shows a PHICH duration defined in LTE. The PHICH duration is configured by a higher layer.

[Table 7]

| PHICH duration | Non-MBSFN subframes | | MBSFN subframes On a carrier supporting both PDSCH and PMCH |
| --- | --- | --- | --- |
| | Subframes 1 and 6 in case of frame structure type 2 | All other cases | |
| Normal | 1 | 1 | 1 |
| Extended | 2 | 3 | 2 |

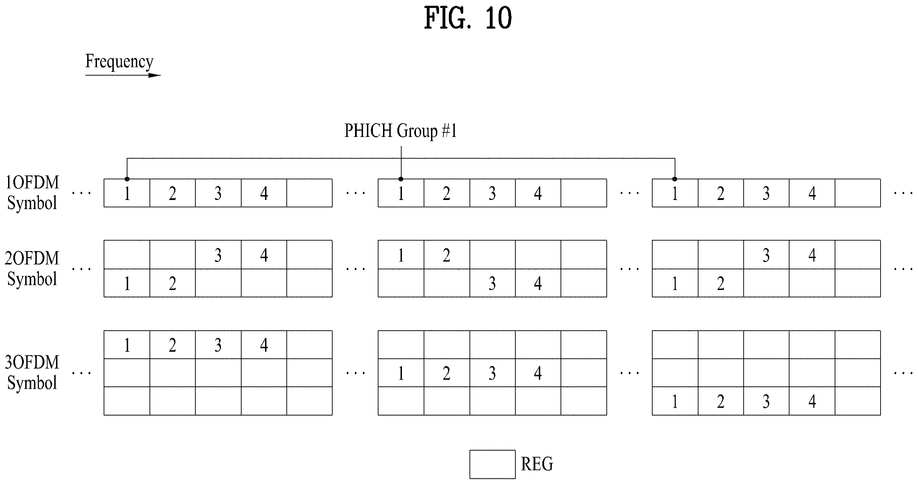

FIG. 10 illustrates exemplary PHICH allocation in a control region according to Table 7.

A PHICH is mapped to the remaining REGs except for PCFICHs and RSs within an OFDMA symbol. Referring to FIG. 10, a PHICH group is transmitted using three REGs which are as far distant from each other as possible in a frequency domain. Consequently, each bit of an HI codeword is transmitted through each REG. PHICH groups are successively allocated in the frequency domain. In FIG. 10, the same numbers represent REGs belonging to the same PHICH group. The PHICH duration is restricted by the size of a control region and corresponds to first to third OFDMA symbols. If a plurality of OFDMA symbols is used for PHICH transmission, REGs belonging to the same PHICH group are transmitted using different OFDM symbols for transmit diversity.

## 2. Carrier Aggregation (CA) Environment

### 2.1 CA Overview

A 3GPP LTE system (conforming to Rel-8 or Rel-9) (hereinafter, referred to as an LTE system) uses Multi-Carrier Modulation (MCM) in which a single Component Carrier (CC) is divided into a plurality of bands. In contrast, a 3GPP LTE-A system (hereinafter, referred to an LTE-A system) may use CA by aggregating one or more CCs to support a broader system bandwidth than the LTE system. The term CA is interchangeably used with carrier combining, multi-CC environment, or multi-carrier environment.

In the present invention, multi-carrier means CA (or carrier combining). Herein, CA covers aggregation of contiguous carriers and aggregation of non-contiguous carriers. The number of aggregated CCs may be different for a DL and a UL. If the number of DL CCs is equal to the number of UL CCs, this is called symmetric aggregation. If the number of DL CCs is different from the number of UL CCs, this is called asymmetric aggregation. The term CA is interchangeable with carrier combining, bandwidth aggregation, spectrum aggregation, etc.

The LTE-A system aims to support a bandwidth of up to 100MHz by aggregating two or more CCs, that is, by CA. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A CA system of the present invention may support CA by defining a new bandwidth irrespective of the bandwidths used in the legacy system.

There are two types of CA, intra-band CA and inter-band CA. Intra-band CA means that a plurality of DL CCs and/or UL CCs are successive or adjacent in frequency. In other words, the carrier frequencies of the DL CCs and/or UL CCs are positioned in the same band. On the other hand, an environment where CCs are far away from each other in frequency may be called inter-band CA. In other words, the carrier frequencies of a plurality of DL CCs and/or UL CCs are positioned in different bands. In this case, a UE may use a plurality of Radio Frequency (RF) ends to conduct communication in a CA environment.

The LTE-A system adopts the concept of cell to manage radio resources. The above-described CA environment may be referred to as a multi-cell environment. A cell is defined as a pair of DL and UL CCs, although the UL resources are not mandatory. Accordingly, a cell may be configured with DL resources alone or DL and UL resources.

For example, if one serving cell is configured for a specific UE, the UE may have one DL CC and one UL CC. If two or more serving cells are configured for the UE, the UE may have as many DL CCs as the number of the serving cells and as many UL CCs as or fewer UL CCs than the number of the serving cells, or vice versa. That is, if a plurality of serving cells are configured for the UE, a CA environment using more UL CCs than DL CCs may also be supported.

CA may be regarded as aggregation of two or more cells having different carrier frequencies (center frequencies). Herein, the term 'cell' should be distinguished from 'cell' as a geographical area covered by an eNB. Hereinafter, intra-band CA is referred to as intra-band multi-cell and inter-band CA is referred to as inter-band multi-cell.

In the LTE-A system, a Primacy Cell (PCell) and a Secondary Cell (SCell) are defined. A PCell and an SCell may be used as serving cells. For a UE in RRC_CONNECTED state, if CA is not configured for the UE or the UE does not support CA, a single serving cell including only a PCell exists for the UE. On the contrary, if the UE is in RRC_CONNECTED state and CA is configured for the UE, one or more serving cells may exist for the UE, including a PCell and one or more SCells.

Serving cells (PCell and SCell) may be configured by an RRC parameter. A physical-layer ID of a cell, PhysCellId is an integer value ranging from 0 to 503. A short ID of an SCell, SCellIndex is an integer value ranging from 1 to 7. A short ID of a serving cell (PCell or SCell), ServeCellIndex is an integer value ranging from 1 to 7. If ServeCellIndex is 0, this indicates a PCell and the values of ServeCellIndex for SCells are pre-assigned. That is, the smallest cell ID (or cell index) of ServeCellIndex indicates a PCell.

A PCell refers to a cell operating in a primary frequency (or a primary CC). A UE may use a PCell for initial connection establishment or connection reestablishment. The PCell may be a cell indicated during handover. In addition, the PCell is a cell responsible for control-related communication among serving cells configured in a CA environment. That is, PUCCH allocation and transmission for the UE may take place only in the PCell. In addition, the UE may use only the PCell in acquiring system information or changing a monitoring procedure. An Evolved Universal Terrestrial Radio Access Network (E-UTRAN) may change only a PCell for a handover procedure by a higher-layer RRCConnectionReconfiguraiton message including mobilityControlInfo to a UE supporting CA.

An SCell may refer to a cell operating in a secondary frequency (or a secondary CC). Although only one PCell is allocated to a specific UE, one or more SCells may be allocated to the UE. An SCell may be configured after RRC connection establishment and may be used to provide additional radio resources. There is no PUCCH in cells other than a PCell, that is, in SCells among serving cells configured in the CA environment.

When the E-UTRAN adds an SCell to a UE supporting CA, the E-UTRAN may transmit all system information related to operations of related cells in RRC_CONNECTED state to the UE by dedicated signaling. Changing system information may be controlled by releasing and adding a related SCell. Herein, a higher-layer RRCConnectionReconfiguration message may be used. The E-UTRAN may transmit a dedicated signal having a different parameter for each cell rather than it broadcasts in a related SCell.

After an initial security activation procedure starts, the E-UTRAN may configure a network including one or more SCells by adding the SCells to a PCell initially configured during a connection establishment procedure. In the CA environment, each of a PCell and an SCell may operate as a CC. Hereinbelow, a Primary CC (PCC) and a PCell may be used in the same meaning and a Secondary CC (SCC) and an SCell may be used in the same meaning in embodiments of the present invention.

**2.2 Cross Carrier Scheduling**

Two scheduling schemes, self-scheduling and cross carrier scheduling are defined for a CA system, from the perspective of carriers or serving cells. Cross carrier scheduling may be called cross CC scheduling or cross cell scheduling.

In self-scheduling, a PDCCH (carrying a DL grant) and a PDSCH are transmitted in the same DL CC or a PUSCH is transmitted in a UL CC linked to a DL CC in which a PDCCH (carrying a UL grant) is received.

In cross carrier scheduling, a PDCCH (carrying a DL grant) and a PDSCH are transmitted in different DL CCs or a PUSCH is transmitted in a UL CC other than a UL CC linked to a DL CC in which a PDCCH (carrying a UL grant) is received.

Cross carrier scheduling may be activated or deactivated UE-specifically and indicated to each UE semi-statically by higher-layer signaling (e.g. RRC signaling).

If cross carrier scheduling is activated, a Carrier Indicator Field (CIF) is required in a PDCCH to indicate a DL/UL CC in which a PDSCH/PUSCH indicated by the PDCCH is to be transmitted. For example, the PDCCH may allocate PDSCH resources or PUSCH resources to one of a plurality of CCs by the CIF. That is, when a PDCCH of a DL CC allocates PDSCH or PUSCH resources to one of aggregated DL/UL CCs, a CIF is set in the PDCCH. In this case, the DCI formats of LTE Release-8 may be extended according to the CIF. The CIF may be fixed to three bits and the position of the CIF may be fixed irrespective of a DCI format size. In addition, the LTE Release-8 PDCCH structure (the same coding and resource mapping based on the same CCEs) may be reused.

On the other hand, if a PDCCH transmitted in a DL CC allocates PDSCH resources of the same DL CC or allocates PUSCH resources in a single UL CC linked to the DL CC, a CIF is not set in the PDCCH. In this case, the LTE Release-8 PDCCH structure (the same coding and resource mapping based on the same CCEs) may be used.

If cross carrier scheduling is available, a UE needs to monitor a plurality of PDCCHs for DCI in the control region of a monitoring CC according to the transmission mode and/or bandwidth of each CC. Accordingly, an appropriate SS configuration and PDCCH monitoring are needed for the purpose.

In the CA system, a UE DL CC set is a set of DL CCs scheduled for a UE to receive a PDSCH, and a UE UL CC set is a set of UL CCs scheduled for a UE to transmit a PUSCH. A PDCCH monitoring set is a set of one or more DL CCs in which a PDCCH is monitored. The PDCCH monitoring set may be identical to the UE DL CC set or may be a subset of the UE DL CC set. The PDCCH monitoring set may include at least one of the DL CCs of the UE DL CC set. Or the PDCCH monitoring set may be defined irrespective of the UE DL CC set. DL CCs included in the PDCCH monitoring set may be configured to always enable self-scheduling for UL CCs linked to the DL CCs. The UE DL CC set, the UE UL CC set, and the PDCCH monitoring set may be configured UE-specifically, UE group-specifically, or cell-specifically.

If cross carrier scheduling is deactivated, this implies that the PDCCH monitoring set is always identical to the UE DL CC set. In this case, there is no need for signaling the PDCCH monitoring set. However, if cross carrier scheduling is activated, the PDCCH monitoring set is preferably defined within the UE DL CC set. That is, the eNB transmits a PDCCH only in the PDCCH monitoring set to schedule a PDSCH or PUSCH for the UE.

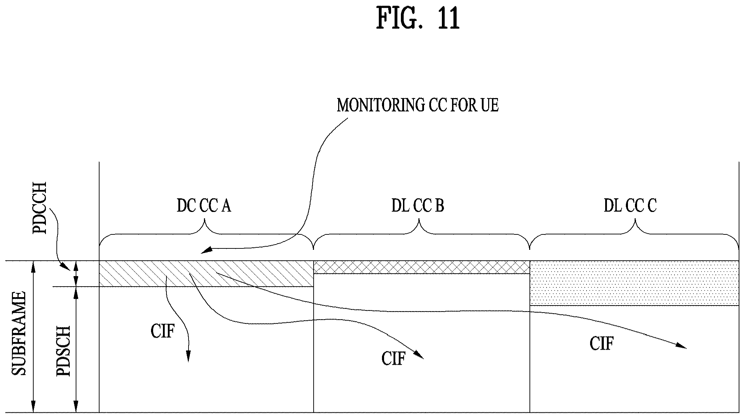

FIG. 11 illustrates a cross carrier-scheduled subframe structure in the LTE-A system, which is used in embodiments of the present invention.

Referring to FIG. 11, three DL CCs are aggregated for a DL subframe for LTE-A UEs. DL CC 'A' is configured as a PDCCH monitoring DL CC. If a CIF is not used, each DL CC may deliver a PDCCH that schedules a PDSCH in the same DL CC without a CIF. On the other hand, if the CIF is used by higher-layer signaling, only DL CC 'A' may carry a PDCCH that schedules a PDSCH in the same DL CC 'A' or another CC. Herein, no PDCCH is transmitted in DL CC 'B' and DL CC 'C' that are not configured as PDCCH monitoring DL CCs.

### 3. FDR Transmission (Full Duplex Radio Transmission)

FDR means a transmitting/receiving end technology for supporting a base station and/or a user equipment (UE) in performing a transmission without duplexing in a manner of dividing uplink/downlink by frequency/time, or the like.

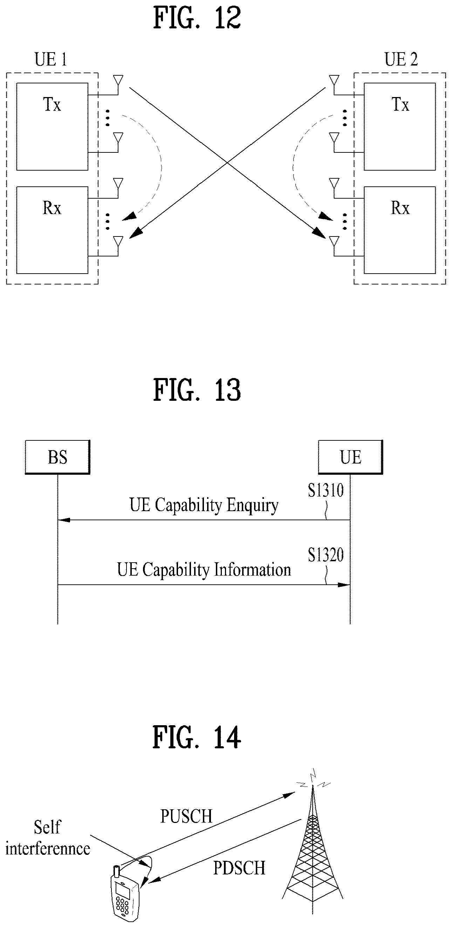

FIG. 12 is a diagram for one example of an FDR scheme.

Referring to FIG. 12, UE 1 and UE 2 perform communication in uplink/downlink (UL/DL) using the same frequency/time resource. Hence, each UE performs a transmission and is also able to receive signals transmitted from another base station or UE, simultaneously. In particular, as indicated by the dotted lines shown in FIG. 12, a communication environment, in which a transmission signal of a corresponding UE may directly trigger self-interference to a receiving module (or receiver) of the corresponding UE, is established.

Considering a multi-cell arrangement environment on a system, a new interference or an increasing interference estimated due to the introduction of FDR can be summarized as follows.

(1) Self-user interference

(2) Multi-user interference

(3) Inter-BS (or inter-eNB) interference

First of all, like FIG. 12, self-interference means that a transmitting signal of its own directly triggers interference to a receiver of its own. Generally, self-interference signal is received with strength stronger by about 60 ~ 90 DB than that of a desired signal. Hence, it is important to completely eliminate the interference by interference cancellation.

Secondly, multi-user interference means interference occurring between user equipments. In a conventional communication system, since half-duplex (e.g., FDD, TDD) of dividing UL/DL each by frequency, time or the like is implemented, interference does not occur between UL and DL. Yet, in an FDR transmission environment, since UL and DL share the same frequency/time resource, as shown in FIG. 12, interference always occurs between a data-transmitting base station and neighbor UEs.

Finally, inter-cell interference means interference occurring between base stations. This means the same communication situation of multi-user interference and also means that interference always occurs due to UL/DL resource sharing between base stations. In particular, although FDR can increase frequency efficiency in a manner of sharing the same time/frequency resource in UL/DL, constraints may be imposed on frequency efficiency improvement due to such an interference increase.

Embodiments of the present invention mentioned in the following description provide various methods, frame structure and apparatus for supporting the same in order to prevent control information from being lost in UL/DL by self-interference in an FDR environment.

### 3.1 Capability Negotiation Method for FDR Transmission

Two kinds of capability negotiation methods for an FDR transmission can be taken into consideration. One is the method of negotiating capability through explicit signaling between a UE and a base station. The other is the method of defining a category per capability of a UE on a system.

FIG. 13 is a diagram for one of user equipment capability negotiation procedures for an FDR transmission between a user equipment and a network.

Referring to FIG. 13, a system sends a UECapabilityEnquiry message to a UE for capability negotiation [S1310].

The UE capability enquiry message is a message for making a request for a UE radio access capability information on heterogeneous RAT (radio access technology) different from E-UTRAN to the UE.

Having received the UECapabilityEnquiry message, the UE sends a UECapabilityInformation message to EUTRAN in response to the received message [S1320].

In the step S1320, if the UE supports FDD and/or TDD, the UE sends the UECapabilityInformation message to a base station in a manner that an fdd-Add-UE-EUTRA-Capabilities field and/or a tdd-Add-UE-EUTRA-Capabilities field is contained in the UECapabilityInformation message. Moreover, in case that the UE supports FDR, the UE sends the UECapabilityInformation message to the base station in a manner that an fdr-Add-UE-EUTRA-Capabilities field corresponding to a new field is contained in the UECapabilityInformation message.

As another method for negotiating an FDR transmission, it is able to define a new UE category.

For instance, UE category 9 or UE category 10 for FDR transmission can be defined on a system. In this case, if the UE is capable of FDR transmission support, the UE transmits UL signaling, which contains UE category 9 or UE category 10, to the base station, thereby informing the base station that the UE can support the FDR transmission.

Table 8 shows one example of a UE category.

[Table 8]

| | UE Category | | | | |
|---|---|---|---|---|---|
| | 6 | 7 | 8 | 9 | 10 |
| Approximate Supported downlink data rate (Mbps) | 300 | 300 | 3000 | TBD | TBD |
| Approximate Supported uplink data rate (Mbps) | 50 | 100 | 1500 | TBD | TBD |
| Number of downlink MIMO layers supported | 2 or 4 | 2 or 4 | 8 | 8 | 8 |
| Number of uplink MIMO layers supported | 1, 2, or 4 | 1, 2, or 4 | 4 | 4 | 4 |
| Support for 64QAM modulation in downlink | - | - | - | - | - |
| Support for 64QAM modulation in uplink | - | - | - | - | - |
| Relative memory requirement for downlink HARQ procession (normalized to category 1 level) | 14.6 | 14.6 | 144 | TBD | TBD |

### 3.2 Downlink FDR Transmission

An FDR transmitting procedure in a DL situation is described in aspect of a UE as follows.

FIG. 14 is a diagram for one example of self-interference in a downlink FDR transmission.

Assume that a UE and a base station support FDR transmission. When the UE receives DL data (i.e., PDSCH signal) on PDSCH assigned to a specific resource region, the UE can transmit UL data through the same resource region. In this case, a PUSCH signal may work as direct self-interference on reception of a PDSCH signal.

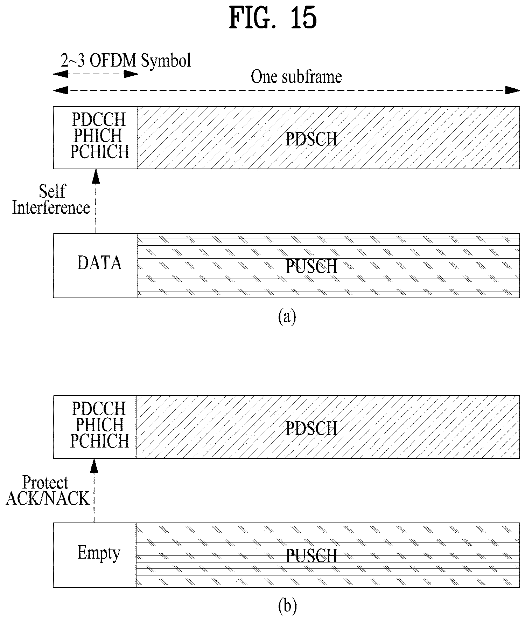

FIG. 15 is a diagram for one example of a frame structure for an FDD-based downlink FDR transmission.

According to FDD-based downlink (DL) FDR, a basic frame structure follows an FDD scheme but resource allocation is performed by an FDR transmission scheme.

FIG. 15 (a) is a diagram to show a frame structure supportive of an FDR transmission shown in FIG. 14. Referring to FIG. 15 (a), a specific subframe (e.g., $n^{th}$ subframe) can be allocated for DL transmission and UL transmission. In doing so, for DL transmission, first to third OFDM symbols are assigned to a control region and the rest region is configured as a data region. In this case, PDCCH, PHICH and/or PCHICH is assigned to the control region and PDSCH is assigned to the data region. In an FDR transmission environment, the same subframe (i.e., $n^{th}$ subframe) can be used for UL transmission.

In this frame structure, self-interference can be eliminated, by various interference eliminating methods, from signals transceived on data channels and such signals can overcome the interference environment by various transmitting methods despite interference existing to some extent. Yet, since a control channel contains information for scheduling UL and DL data channels and ACK/NACK information, it may be sensitive to interference.

Hence, by changing the frame structure, as shown in FIG. 15 (b), it is able to eliminate self-interference that may be applied to a DL control channel. Referring to FIG. 15 (b), a system can prevent interference from being possibly applied to a control region in a manner of not assigning a DL data channel to the control region having a DL control channel assigned thereto.

In particular, if OFDM symbols of PUSCH corresponding to a DL control channel in a UL subframe are nulled, as shown in FIG. 15 (b), it is able to protect control information (e.g., ACK/NACK information) of DL.

In another aspect of FIG. 15 (b), a PUSCH region corresponding to all DL control channel region is not nulled but PUSCH corresponding to a control channel region for transmitting PHICH can be nulled only. For instance, if PHISCH is not assigned in a specific subframe, all regions of the corresponding subframe can be assigned as PUSCH.

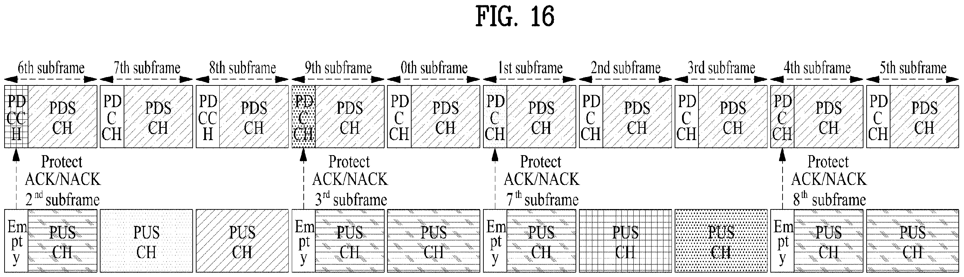

FIG. 16 is a diagram for one example of a frame structure for a TDD-based downlink FDR transmission.

Table 9 in the following shows one example of a UL/DL configuration indicating a location of a subframe to which ACK/NACK carried PHICH is assigned in a TDD situation.

[Table 9]

| TDD UL/DL Configuration | subframe index n | | | | | | | | | |
|---|---|---|---|---|---|---|---|---|---|---|
| | 0 | 1 | 2 | 3 | 4 | 5 | 6 | 7 | 8 | 9 |
| 0 | | | 4 | 7 | 6 | | | 4 | 7 | 6 |
| 1 | | | 4 | 6 | | | | 4 | 6 | |
| 2 | | | 6 | | | | | 6 | | |
| 3 | | | 6 | 6 | 6 | | | | | |
| 4 | | | 6 | 6 | | | | | | |
| 5 | | | 6 | | | | | | | |
| 6 | | | 4 | 6 | 6 | | | 4 | 7 | |

If TDD UL/DL configuration is 1, assuming that 8th subframe is a current subframe transmitted in UL on PUSCH, ACK/NACK for the 8th subframe is transmitted after 6th subframe. In particular, referring to FIG. 16, ACK/NACK information on UL data (i.e., PUSCH signal) transmitted in the 8th subframe should be transmitted in 4th subframe of a next frame.

Hence, in order to protect PHICH transmitted in the 4th subframe of the next frame, PUSCH is not assigned to a region (e.g., 2 ~ 3 OFDM symbol region) corresponding to a control region in the same subframe, an empty region is formed in the corresponding region, and PUSCH is assigned to the rest region only.

In FIG. 16, an arrow indicates a subframe for transmitting ACK/NACK information in case of TDD UL/DL configuration in Table 9. By not allocating DL data channel region corresponding to DL control region in the corresponding subframes, it is able to protect ACK/NACK information.

Moreover, since FIG. 16 shows that ACK/NACK information is protected only, a base station can assign PUSCH to all other subframes to which PHICH is not assigned without empty regions.

Since such a method is unable to use a part corresponding to a control channel region, there is a loss of data throughput. Yet, since such a method has low complexity, it is easily applicable to LTE/LTE-A system.

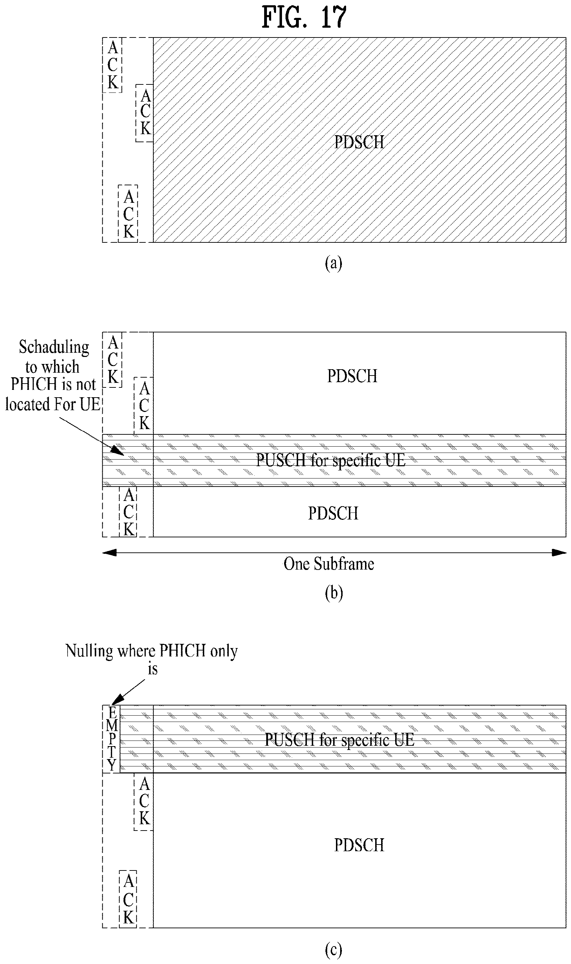

FIG. 17 is a diagram for another example of a frame structure for an FDD-based downlink FDR transmission.

The method described with reference to FIG. 15 has a considerable amount of data throughput loss. Hence, embodiments mentioned in the following propose a method of nulling OFDM symbols for an optimal ACK/NACK location.

A UE can obtain an assigned location of PHICH using Formula 15.

[Formula 15]

$$l'_i = 0,$$

$$\bar{n}_i = \begin{cases} \left( \left\lfloor N_{ID}^{cell} \cdot n_{l'_i} / n_1 \right\rfloor + m' \right) \bmod n_{l'_i} & i = 0 \\ \left( \left\lfloor N_{ID}^{cell} \cdot n_{l'_i} / n_1 \right\rfloor + m' + \left\lfloor n_{l'_i} / 3 \right\rfloor \right) \bmod n_{l'_i} & i = 1 \\ \left( \left\lfloor N_{ID}^{cell} \cdot n_{l'_i} / n_1 \right\rfloor + m' + \left\lfloor 2 n_{l'_i} / 3 \right\rfloor \right) \bmod n_{l'_i} & i = 2 \end{cases}$$

In Formula 15, $l'_i$ is a time domain index and $\bar{n}_i$ indicates a frequency domain index having a resource element group assigned thereto. $N_{ID}^{cell}$ is a cell identifier (Cell ID), $n_{l'}$ indicates the number of resource element groups having PCFICH not assigned thereto in OFDM $l'$, $m'$ indicates PCFICH mapping unit number, and i = 0, 1, 2.

In particular, a UE can obtain a logical REG index of PHICH through the cell ID $N_{ID}^{cell}$ obtained through PSS and SSS. Assuming that PHICH signal is transmitted quasi-statically on OFDM symbol derived from Formula 15 only, an REG index indicating REG for transmitting PHICH is mapped to PRE. Hence, the UE can be aware of a PHICH transmitted location based on Formula 15.

In doing so, since a base station assigns PHICH, it is already aware of PHICH to which RBs will be assigned. Hence, as shown in FIG. 17 (b) or FIG. 17 (c), the base station can schedule a PUSCH region with RBs to which PHICH is not assigned. Moreover, by sending such scheduling information to the UE, the base station can minimize a nulling region for the PUSCH region. The UE can transmit a PUSCH signal through a region scheduled by the base station.

FIG. 17 (a) shows a structure of a general DL subframe. Particularly, a control channel region is assigned to 1 to 3 OFDM symbols of the corresponding subframe and a data channel region is assigned to the rest region.

FIG. 17 (b) and FIG. 17 (c) show structures of a DL subframe in an FDM environment. In this case, the base station can assign the rest DL channel region except a PHICH assigned region in a control region as a UL channel region. That is, the base station nulls only a region corresponding to the PHICH assigned control region on PUSCH and is then able to allocate the corresponding region to the UE.

### 3.3 Downlink FDR Transmitting Method in Carrier Aggregation (CA) Environment

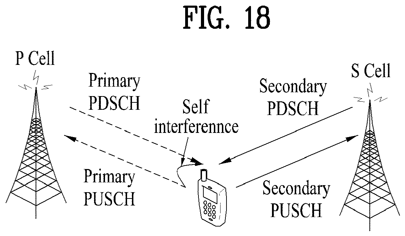

FIG. 18 is a diagram to illustrate self-interference in a CA environment.

The CA environment can refer to the description of Chapter 2. Referring to FIG. 18, it can be confirmed that self-interference on a control channel is generated from P cell by PUSCH and also confirmed that self-interference on the control channel is not generated from S cell. The reason for this is that control information is not transmitted on S cell because a scheduling information for S cell and a UL control information are transceived on P cell due to cross carrier scheduling in a CA situation.

Hence, as shown in FIG. 15 (b) and FIG. 16, an empty region (i.e., a region of nulling PUSCH corresponding to a control channel region) having PUSCH not assigned thereto is operated in P cell, while an FDR transmission can be performed in S cell without operating an empty region.

### 3.3.1 CA & FDR Negotiation Procedure

A CA & FDR negotiation procedure is described with reference to FIG. 13 as follows. A base station can negotiate with a UE for whether a CA & FDR transmission is supported. In particular, the base station sends a higher layer message for checking whether the UE can operate in FDR and a UECapabilityEnquiry message for checking whether the UE supports a CA to the UE [S1310].

Having received the UECapabilityEnquiry message, the UE can inform the base station whether the UE supports an FDR transmission and whether the UE supports the CA in response to the received message [S1320]. For the step S1320, the following method can be considered.

According to a first method, the UE adds an RRC field to operate FDR like Chapter 3.1 and sends a UE-EUTRA-Capability message of TS.36.331 in a manner that a supportedBandCombination field is contained in the UE-EUTRA-Capability message, thereby informing the base station whether the CA is supported by the UE.

According to a second method, the UE newly defines a field indicating a presence or non-presence of support of a CA and FDR operation in an RRC layer UECapabilityInformation message and is able to send the corresponding message to the base station.

According to a third method, as mentioned in the foregoing description of Chapter 3.1, it is able to newly define UE category 9 or UE category 10 for supporting a CA and FDR transmission. Thereafter, the UE sends the information on a category of its own to the base station by higher layer signaling, thereby informing the base station whether the CA and FDR transmission can be supported.

As mentioned in the foregoing description, after the UE and the base station have negotiated the CA and FDR transmission, they can perform a CA operation and an FDR transmission. Namely, the base station performs cross-carrier scheduling configuration, transmits ACK/NACK information of S cell on PDCCH of P cell, and sets S cell to an FDR transmission mode. In this case, the operation of the P cell is performed like the method mentioned in the description of Chapter 3.2 and the operation of the S cell can be performed in FDR transmission mode.

### 3.3.2 Frame Structure for FDR Transmission in CA Situation

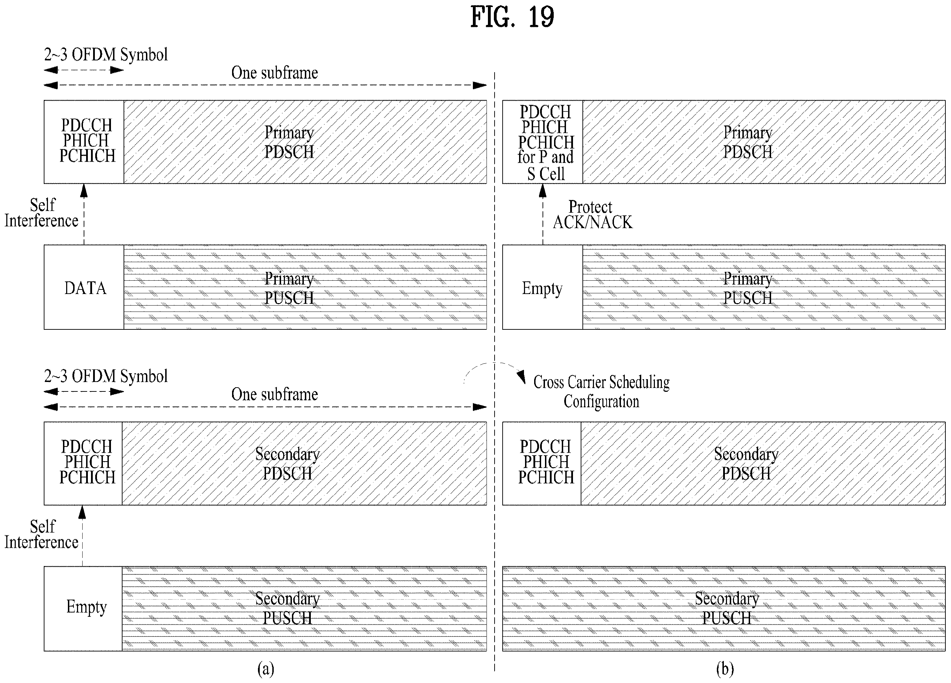

FIG. 19 is a diagram for one example of a frame structure for an FDR transmission in a CA situation.

FIG. 19 (a) shows a frame structure in case of not performing cross carrier scheduling in a CA situation. FIG. 19 (b) shows a frame structure in case of performing cross carrier scheduling in a CA situation.

A UE and base station may not perform cross carrier scheduling despite being in a CA situation. In this case, referring to FIG. 19 (a), in case that the UE and base station perform an FDR transmission, a PUSCH transmission may work as interference on a DL control channel. Hence, in such a case, as mentioned in the foregoing description of Chapter 3.2, it is able to eliminate the interference on a control channel by setting a region corresponding to the DL control channel to an empty region to which PUSCH is not assigned. In particular, empty regions can be assigned to both P cell and S cell.

A UE and base station can perform cross carrier scheduling in a CA situation. Hence, in this case, referring to FIG. 19 (b), in a subframe used by P cell, an empty region is assigned to UL and the rest data channel region can operate in FDR transmission mode. In doing so, in case of S cell, an empty region is not assigned and the whole subframe can be set to operate in FDR transmission mode.

### 3.3.3 Hybrid FDR Transmission Method in CA Situation

In another aspect of the present invention, with respect to operations of P cell and S cell in a CA configuration situation, the P cell can transmit information of the S cell together by cross carrier scheduling configuration. In doing so, a base station and/or a UE enables the P cell to operate by Half Duplex and also enables the S cell to operate by Full Duplex, in a specific subframe.

In particular, by operating the P cell by Half Duplex like FDD or TDD, it is able to eliminate interference on a control channel to which PHICH, PDCCH, PCFICH and the like are assigned. By operating the S cell by Full Duplex like FDR, it is able to increase data throughput.

### 3.4 Uplink FDR Transmission

An FDR transmission method for protecting a control channel in a UL situation is described in aspect of a UE as follows.

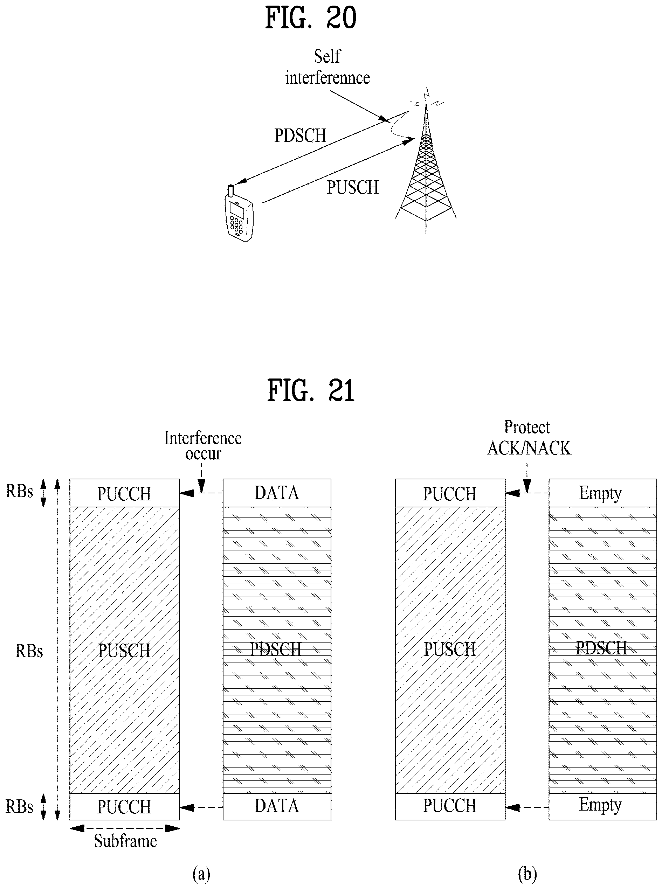

FIG. 20 is a diagram for one example of self-interference in an uplink FDR transmission.

A UE can transmit channel state information (CSI) corresponding to uplink channel information (UCI) to a base station in UL. For instance, the UE can transmit CSI to the base station using a PUCCH signal periodically transmitted on a control channel region. Moreover, the UE can transmit CSI to the base station using a PUSCH signal through a data channel region in case of a request made by the base station. In this case, the CIS may include a CQI (channel quality indication), a PMI (precoding matrix indicator), an RI (rank indication), an ACK/NACK for DL data and/or the like.

Yet, in case that the UE and base station operate by FDR, when UL control information is transmitted, self-interference may occur due to a reception of DL data (e.g., PDSCH signal). Hence, embodiments of the present invention mentioned in the following description propose a frame structure for eliminating interference on CSI as well as ACK/NACK in case of a UL FDR transmission.

FIG. 21 is a diagram for one example of a frame structure for an FDD-based uplink FDR transmission.

FDD-based UL FDR means that resource allocation is performed by an FDR transmission scheme despite that a basic frame structure follows an FDD scheme.

FIG. 21 (a) is a diagram to show a frame structure supportive of a UL FDR transmission. Referring to FIG. 21 (a), for a UL transmission, PUCCH and PUSCH can be assigned to a specific subframe (e.g., $n^{th}$ subframe). In this case, a UL subframe structure refers to the former description with reference to FIG. 4. Moreover, in an FDR transmission environment, the same subframe (i.e., $n^{th}$ subframe) may be allocated for a DL transmission.

In this case, PUCCH assigned to RBs on both ends of system RBs (e.g., the number of RBs of PUCCH may vary depending on a system) may be damaged by a PDSCH signal. In particular, ACK/NACK corresponding to control information for UL may be damaged. Hence, since PUCCH carries UL control information including ACK/NACK information, it is preferable that interference is eliminated as much as possible.

Thus, by changing a frame structure, as shown in FIG. 21 (b), it is able to eliminate self-interference possibly applied to a UL control channel. Referring to FIG. 21(b), by not assigning a DL control channel to a control region having the UL control channel assigned thereto in a system, it is able to eliminate interference that may be possibly applied to a control channel region in advance.

In particular, like FIG. 21 (b), by nulling OFDM symbols of PDSCH corresponding to the UL control channel in a UL subframe, it is able to protect control information (e.g., ACK/NACK information) in UL.

The UE should transmit ACK/NACK for PDSCH data of $(n - 4)^{th}$ subframe through PUCCH in the $n^{th}$ subframe like TS 36.213 document. In an FDD environment, if all subframes are configured by the scheme shown in FIG. 21 (b), ACK/NACK can be protected.

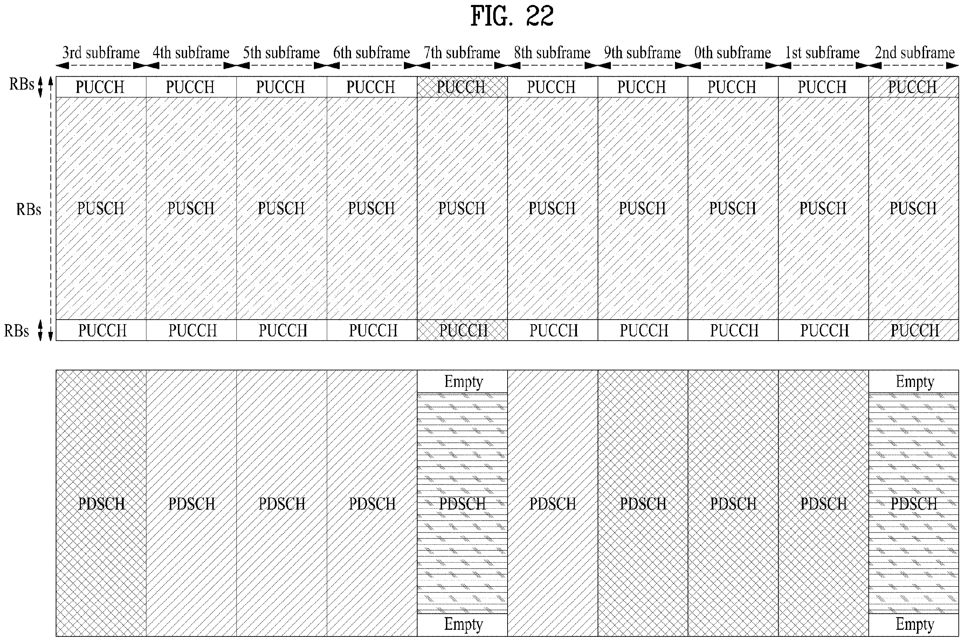

FIG. 22 is a diagram for one example of a frame structure for a TDD-based uplink FDR transmission.

In a TDD environment, a nulling method is preferably differentiated per subframe index. A subframe structure for protecting UL control information in the TDD environment is described as follows.

Table 10 in the following shows one example of a UL-DL configuration in a TDD situation. Table 11 shows the DL associated set index k according to a UL-DL configuration for TDD.

[Table 10]

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

[Table 11]

| UL/DL Configuration | Subframe n | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

In Table 10, when a UL-DL configuration index is 2 and a subframe number is 2, a subframe (i.e., Subframe 2) is the subframe allocated for UL. In this case, referring to Table 11, a UE transmits CSI, which includes ACK/NACK information on DL data received in previous 4th, 6th, 7th and 8th subframes with reference to the Subframe 2, through PUCCH of the Subframe 2.

Hence, a base station nulls RBs in PDSCH as many as PUCCH assigned RBs like FIG. 21 (b) for a UL FDR transmission of the Subframe 2. Particularly, by assigning PDSCH corresponding to a PUCCH region as an empty region, it is able to eliminate interference, which may be applied to PUCCH, in advance.

FIG. 22 is a diagram for one example of frame arrangement for an FDD-based uplink FDR transmission.

In the following, shown is a method of protecting ACK/NACK only in UL control information. UL ACK/NACK information can be periodically transmitted on PUCCH. In this case, as ACK/NACK transmission periodicity is 5 subframes, assume that ACK/NACK is transmitted in Subframe 7 (i.e., 7th subframe) and Subframe 1 (i.e., 1st subframe) of a next frame.

Referring to FIG. 22, subframes in the upper part show an allocated UL resource, while subframes in the lower part show an allocated DL resource for an FDR operation at the same locations of the former subframes in the upper part.

Hence, a base station allocates empty regions to RBs corresponding to PUCCH regions in the Subframe 7 and the Subframe 1 instead of assigning PDSCH, thereby eliminating self-interference.

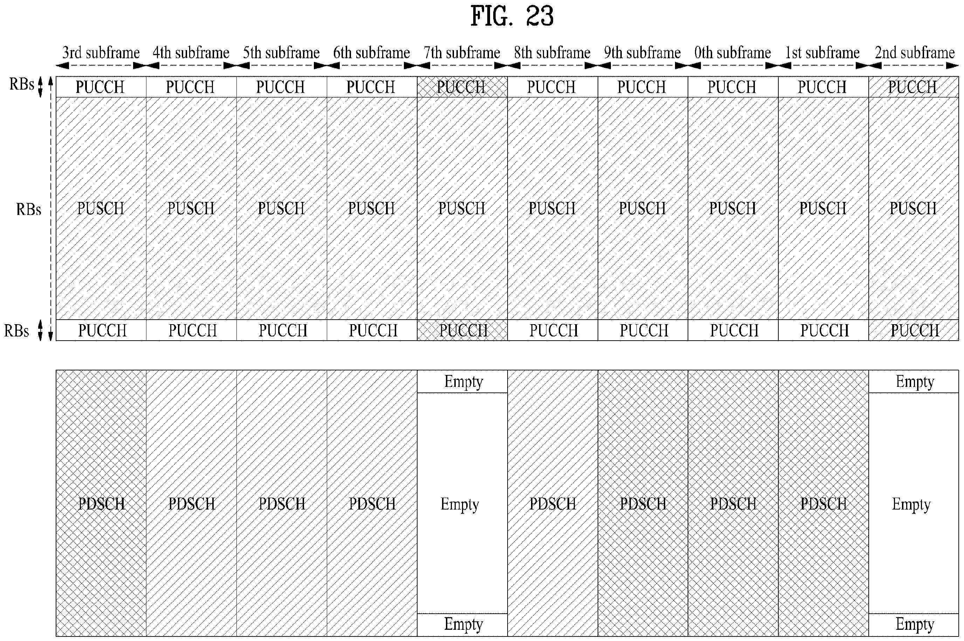

FIG. 23 is a diagram for another example of frame arrangement for an FDD-based uplink FDR transmission.

A case of transmitting ACK/NACK on PUCCH and PUSCH simultaneously is described as follows. The frame arrangement structure shown in FIG. 23 is basically identical to that shown in FIG. 22.

Yet, since FIG. 23 shows that ACK/NACK is transmitted on PUCCH and PUSCH simultaneously, a base station assigns Subframe 7 and Subframe 2 as empty regions and may not assign PDSCH. In particular, The Subframe 7 and the Subframe 2 operate as half duplex of FDD and the rest of subframes may operate in FDR mode.

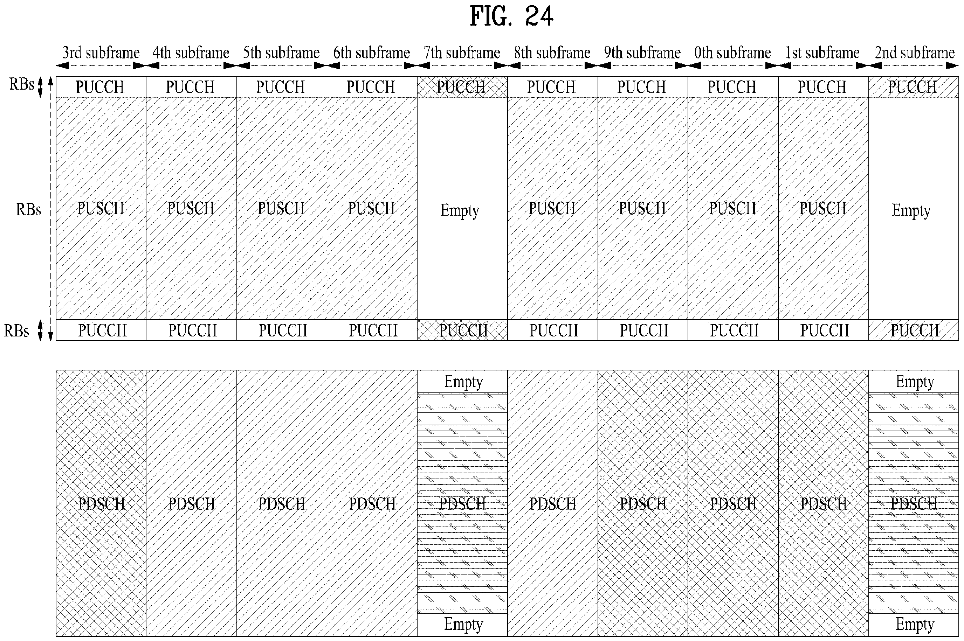

FIG. 24 is a diagram for further example of frame arrangement for an FDD-based uplink FDR transmission.

The frame arrangement structure shown in FIG. 24 is basically identical to that shown in FIG. 22. Yet, in case of FIG. 24, a base station allocates a PDSCH region corresponding to a PUCCH region as an empty region and also allocates a PUSCH region as an empty region without allocation, thereby enabling Subframe 7 and Subframe 2 to be configured to operate by FDD.

## 4. Apparatuses

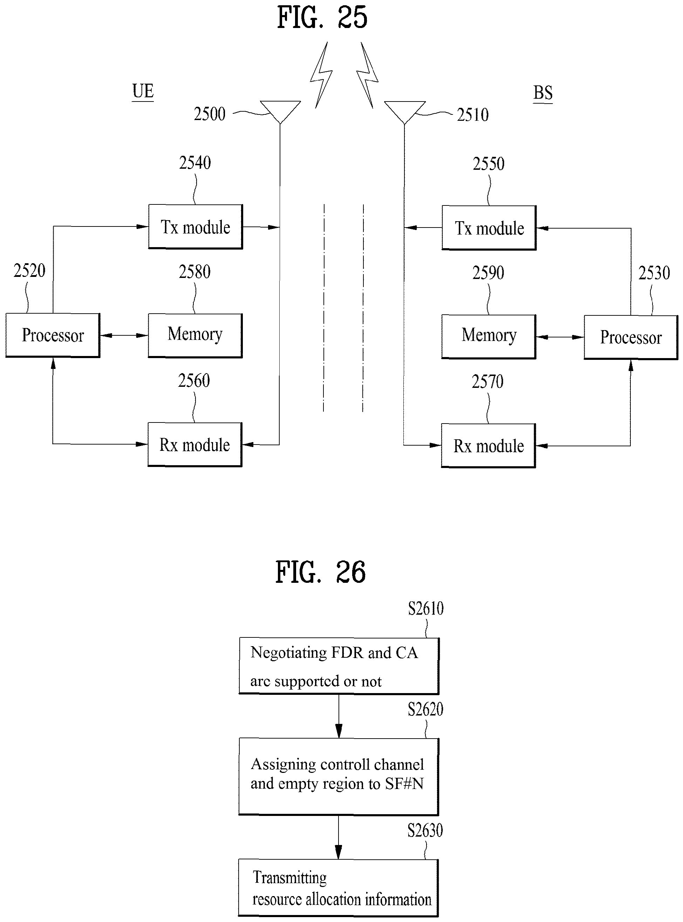

Apparatuses illustrated in FIG. 25 are means that can implement the methods described before with reference to FIGS. 1 to 24.

A UE may act as a transmitter on a UL and as a receiver on a DL. A BS may act as a receiver on a UL and as a transmitter on a DL.

That is, each of the UE and the BS may include a Transmission (Tx) module 2540 or 2550 and a Reception (Rx) module 2560 or 2570, for controlling transmission and reception of information, data, and/or messages, and an antenna 2500 or 2510 for transmitting and receiving information, data, and/or messages.

Each of the UE and the BS may further include a processor 2520 or 2530 for implementing the afore-described embodiments of the present invention and a memory 2580 or 2590 for temporarily or permanently storing operations of the processor 2520 or 2530.

Using configuration components and functions of the UE and base station devices mentioned in the foregoing description, embodiments of the present invention can be implemented. For instance, the processor of the base station can configure a frame structure for supporting an FDR transmission by combining the methods disclosed in Chapters 1 to 3.

Referring to FIG. 26, the processor of the base station controls the transmitting module and the receiving module so as to negotiate with the UE for a presence or non-presence of an FDR transmission and/or a presence or non-presence of a CA support [cf. FIG. 13] [S2610]. If the UE and base station support the FDR transmission, the base station assigns a DL control channel in Subframe n and allocates a UL empty region to a corresponding equivalent region without assigning PUSCH [refer to FIGs. 15 to 17 and FIGs. 22 to 24 for details]. Alternatively, the base station assigns a UL control channel in the Subframe n and allocates a DL empty region to a corresponding equivalent region without assigning PDSCH [refer to FIGs. 18 to 21 for details] [S2620]. Thereafter, the processor of the base station transmits a PDCCH signal containing resource allocation information for the allocated subframe to the UE [S2630]. If receiving the PDCCH signal, the UE transmits control information to the base station based on the resource allocation information. For details, Chapter 3 is referred to.

Referring back to FIG. 25, the Tx and Rx modules of the UE and the BS may perform a packet modulation/demodulation function for data transmission, a highspeed packet channel coding function, OFDMA packet scheduling, TDD packet scheduling, and/or channelization. Each of the UE and the BS of FIG. 25 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present invention may be achieved by various means, for example, hardware, firmware, software, or a combination thereof.

In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing the above-described functions or operations. A software code may be stored in the memory 2580 or 2590 and executed by the processor 2520 or 2530. The memory is located at the interior or exterior of the processor and may transmit and receive data to and from the processor via various known means.

INDUSTRIAL APPLICABILITY

Embodiments of the present invention are applicable to various wireless access systems including a 3GPP system, a 3GPP2 system, and/or an IEEE 802.xx system. In addition to these wireless access systems, the embodiments of the present invention are applicable to all technical fields in which the wireless access systems find their applications.

Claims

1. A method of configuring a frame structure in a radio access system supportive of full duplex radio, FDR, transmission, the method comprising:

sending (S2610), to a user equipment, UE, a capability enquiry message;
receiving (S2610), from the UE, a UE capability information message including a field indicating that FDR transmission is supported by the UE;
assigning (S2620) a downlink, DL, control channel and a DL data channel to a prescribed subframe of a serving cell;
assigning (S2620) an uplink, UL, data channel to the prescribed subframe for the FDR transmission of the serving cell;
allocating (S2620) an empty region by nulling a resource region in the UL data channel, wherein the resource region is a part of the UL data channel and corresponds to the DL control channel; and
transmitting (S2630), to the UE, resource allocation information for the prescribed subframe,
wherein the FDR transmission is performed in a manner that a UL transmission and a DL transmission are simultaneously performed in a same region of the prescribed subframe.

2. The method of claim 1, wherein the empty region is only allocated to a physical Hybrid ARQ indication channel assigned region in the DL control channel.

3. The method of claim 1, wherein the UE capability information message further includes a field indicating a carrier aggregation, and wherein the empty region is allocated to a primary cell only.

4. A base station allocating resource in a radio access system supportive of full duplex radio, FDR, transmission, the base station comprising:

a transmitting module (2550);
a receiving module (2570); and
a processor (2530) supporting the FDR transmission,
wherein the processor (2530) is configured to:

send, to a user equipment, UE, a capability enquiry message by using the transmitting module (2550),
receive, from the UE, a UE capability information message including a field indicating the FDR transmission is supported by using the receiving module (2570),
assign a downlink, DL, control channel and a DL data channel to a prescribed subframe of a serving cell;
assign an uplink, UL, data channel to the prescribed subframe for the FDR transmission of the serving cell;
allocate an empty region by nulling a resource region in the UL data channel, wherein the resource region is a part of the UL data channel and corresponds to the DL control channel; and
transmit resource allocation information for the prescribed subframe by controlling the transmitting module (2550);
wherein the FDR transmission is performed in a manner that a UL transmission and a DL transmission are simultaneously performed in a same region of the prescribed subframe.

5. The base station of claim 4, wherein the empty region is only allocated to a physical Hybrid ARQ indication channel assigned region in the DL control channel.

Patentansprüche

1. Verfahren zum Konfigurieren einer Rahmenstruktur in einem Funkzugangssystem, das eine Vollduplex-Funk-, FDR, Übertragung unterstützt, wobei das Verfahren umfasst:

Senden (S2610), an ein Benutzerendgerät, UE, einer Fähigkeitsanfragenachricht;
Empfangen (S2610), von dem UE, einer UE-Fähigkeitsinformationsnachricht, die ein Feld aufweist, das anzeigt, dass die FDR-Übertragung durch das UE unterstützt wird;
Zuweisen (S2620) eines Abwärtsstrecken-, DL, Steuerkanals und eines DL-Datenkanals zu einem vorgeschriebenen Subrahmen einer versorgenden Zelle;
Zuweisen (S2620) eines Aufwärtsstrecken-, UL, Datenkanals zu dem vorgeschriebenen Subrahmen für die FDR-Übertragung der versorgenden Zelle;
Zuordnen (S2620) eines leeren Bereichs durch Ausnullen eines Ressourcenbereichs in dem UL-Datenkanal, wobei der Ressourcenbereich ein Teil des UL-Datenkanals ist und dem DL-Steuerkanal entspricht; und
Übertragen (S2630), an das UE, von Ressourcenzuordnungsinformationen für den vorgeschriebenen Subrahmen,
wobei die FDR-Übertragung in einer Weise durchgeführt wird, dass eine UL-Übertragung und eine DL-Übertragung in einem selben Bereich des vorgeschriebenen Subrahmens gleichzeitig durchgeführt werden.

2. Verfahren nach Anspruch 1, wobei der leere Bereich nur einem Bereich in dem DL-Steuerkanal zugeordnet wird, der einem physikalischen hybriden ARQ-Anzeigekanal zugewiesen ist.

3. Verfahren nach Anspruch 1, wobei die UE-Fähigkeitsinformationsnachricht ferner ein Feld enthält, das eine Trägeraggregation anzeigt, und wobei der leere Bereich nur einer primären Zelle zugeordnet wird.

4. Basisstation, die Ressourcen in einem Funkzugangssystem zuordnet, das Vollduplex-Funk-, FDR, Übertragung unterstützt, wobei die Basisstation umfasst:

ein Übertragungsmodul (2550);
ein Empfangsmodul (2570); und
einen Prozessor (2530), der die FDR-Übertragung unterstützt,
wobei der Prozessor (2530) konfiguriert ist zum:

Senden, an ein Benutzerendgerät, einer Fähigkeitsanfragenachricht, UE, unter Verwendung des Übertragungsmoduls (2550),
Empfangen, von dem UE, einer UE-Fähigkeitsinformationsnachricht, die ein Feld enthält, das anzeigt, dass die FDR-Übertragung unterstützt wird, unter Verwendung des Empfangsmoduls (2570),
Zuweisen eines Abwärtsstrecken-, DL, Steuerkanals und eines DL-Datenkanals zu einem vorgeschriebenen Subrahmen einer versorgenden Zelle;
Zuweisen eines Aufwärtsstrecken-UL-Datenkanals zu dem vorgeschriebenen Subrahmen für die FDR-Übertragung der versorgenden Zelle;
Zuordnen eines leeren Bereichs durch Ausnullen eines Ressourcenbereichs in dem UL-Datenkanal, wobei der Ressourcenbereich ein Teil des UL-Datenkanals ist und dem DL-Steuerkanal entspricht; und
Übertragen von Ressourcenzuordnungsinformationen für den vorgeschriebenen Subrahmen durch Steuern des Übertragungsmoduls (2550);
wobei die FDR-Übertragung in einer Weise durchgeführt wird, dass eine UL-Übertragung und eine DL-Übertragung in einem selben Bereich des vorgeschriebenen Subrahmens gleichzeitig durchgeführt werden.

5. Basisstation nach Anspruch 4, wobei der leere Bereich nur einem Bereich in dem DL-Steuerkanal zugeordnet wird, der einem physikalischen hybriden ARQ-Anzeigekanal zugewiesen ist.

## Revendications

1. Procédé de configuration d'une structure de trame dans un système d'accès radio prenant en charge une transmission radio duplex complète, FDR, le procédé comprenant :

l'envoi (S2610), à un équipement d'utilisateur, UE, d'un message d'interrogation de capacité ;
la réception (S2610), en provenance de l'UE, d'un message d'informations de capacité d'UE comprenant un champ indiquant qu'une transmission FDR est prise en charge par l'UE ;
l'assignation (S2620) d'un canal de commande de liaison descendante, DL, et d'un canal de données DL à une sous-trame prescrite d'une cellule de desserte ;

l'assignation (S2620) d'un canal de données de liaison montante, UL, à la sous-trame prescrite pour la transmission FDR de la cellule de desserte ;

l'allocation (S2620) d'une région vide par l'annulation d'une région de ressource dans le canal de données UL, dans lequel la région de ressource est une partie du canal de données UL et correspond au canal de commande DL ; et

la transmission (S2630), à l'UE, d'informations d'allocation de ressource pour la sous-trame prescrite,

dans lequel la transmission FDR est effectuée de telle manière qu'une transmission UL et une transmission DL soient effectuées simultanément dans une même région de la sous-trame prescrite.

2. Procédé selon la revendication 1, dans lequel la région vide est uniquement allouée à une région assignée à un canal d'indication ARQ hybride physique dans le canal de commande DL.

3. Procédé selon la revendication 1, dans lequel le message d'informations de capacité d'UE comprend en outre un champ indiquant une agrégation de porteuses, et dans lequel la région vide est allouée uniquement à une cellule primaire.

4. Station de base allouant une ressource dans un système d'accès radio prenant en charge une transmission radio duplex complète, FDR, la station de base comprenant :

un module de transmission (2550) ;
un module de réception (2570) ; et
un processeur (2530) prenant en charge la transmission FDR,
dans lequel le processeur (2530) est configuré pour effectuer :

l'envoi, à un équipement d'utilisateur, UE, d'un message d'interrogation de capacité par l'utilisation du module de transmission (2550),

la réception, en provenance de l'UE, d'un message d'informations de capacité d'UE comprenant un champ indiquant que la transmission FDR est prise en charge par l'utilisation du module de réception (2570),

l'assignation d'un canal de commande de liaison descendante, DL, et d'un canal de données DL à une sous-trame prescrite d'une cellule de desserte ;

L'assignation d'un canal de données de liaison monante, UL, à la sous-trame prescrite pour la transmission FDR de la cellule de desserte ;

l'allocation d'une région vide par l'annulation d'une région de ressource dans le canal de données UL, dans laquelle la région de ressource est une partie du canal de données UL et correspond au canal de commande DL ; et

la transmission d'informations d'allocation de ressource pour la sous-trame prescrite par la commande du module de transmission (2550),

dans laquelle la transmission FDR est effectuée de telle manière qu'une transmission UL et une transmission DL soient effectuées simultanément dans une même région de la sous-trame prescrite.

5. Station de base selon la revendication 4, dans laquelle la région vide est uniquement allouée à une région assignée à un canal d'indication ARQ hybride physique dans le canal de commande DL.

# FIG. 1

Initial Cell
Search

System
Information
Reception

Random Access Procedure

General DL/UL Tx/Rx
S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11          S12          S13    S14       S15    S16       S17

• DL/UL ACK/NACK

• UE CQI/PMI/Rank Report using PUSCH/PUCCH

# FIG. 2

One radio frame,$T_f$ =307200$T_s$ = 10ms

One slot, $T_{slot}$ =15360$T_s$ = 0.5ms

| #0 | #1 | #2 | ··· | #18 | #19 |

One subframe

(a)

One radio frame,$T_f$=307200$T_s$= 10ms

One half-frame,$T_s$=153600T = 5ms

One slot, $T_{slot}$=15360$T_s$

30720$T_s$

| Subframe#0 | | | | Subframe#2 | Subframe#3 | Subframe#4 | Subframe#5 | | | | Subframe#7 | Subframe#8 | Subframe#9 |

One subframe, 30720$T_s$

DwPTS  GP  UpPTS

DwPTS  GP  UpPTS

(b)

EP 3 094 023 B1

# FIG. 3

Slot

7 symbols

$N^{DL} \times 12$ Subcarriers

12 Subcarriers

Resource block
12×7 Resource element

Resource element

# FIG. 4

Control region

Data region

RB pair

frequency

Time

First slot

Second slot

Subframe

# FIG. 5

Control region          Data region

First slot          Second slot

Subframe

frequency

Time

# FIG. 6

# FIG. 7

BS | UE

uplink allocation
via PDCCH — S710

uplink transmission — S720

ACK/NACK
via PHICH — S730

# FIG. 8

810 820 830 840 850 860

| 1-bit A/N | → | Coding | → | Modulation | → | Spreading | → | Layer mapping | → | Resource mapping |

# FIG. 9

HI

S910

Channel coding

$b_0, b_1, b_2$

# FIG. 10

Frequency

PHICH Group #1

1OFDM
Symbol

| 1 | 2 | 3 | 4 | |
|---|---|---|---|---|

| 1 | 2 | 3 | 4 | |
|---|---|---|---|---|

| 1 | 2 | 3 | 4 | |
|---|---|---|---|---|

2OFDM
Symbol

3OFDM
Symbol

☐ REG

EP 3 094 023 B1

# FIG. 11

MONITORING CC FOR UE

DC CC A  DL CC B  DL CC C

PDCCH

PDSCH

SUBFRAME

CIF  CIF  CIF

EP 3 094 023 B1

# FIG. 12

UE 1

Tx

Rx

UE 2

Tx

Rx

# FIG. 13

BS

UE

S1310

UE Capability Enquiry

S1320

UE Capability Information

# FIG. 14

Self
interferennce

PUSCH

PDSCH

# FIG. 15

2~3 OFDM Symbol

One subframe

PDCCH PHICH PCHICH — PDSCH

Self Interference

DATA — PUSCH

(a)

PDCCH PHICH PCHICH — PDSCH

Protect ACK/NACK

Empty — PUSCH

(b)

# FIG. 16

| 6th subframe | 7th subframe | 8th subframe | 9th subframe | 0th subframe | 1st subframe | 2nd subframe | 3rd subframe | 4th subframe | 5th subframe |

# FIG. 17

(a)

Schaduling to which PHICH is not located For UE

One Subframe

(b)

Nulling where PHICH only is

(c)

# FIG. 18

# FIG. 19

(a)

(b)

# FIG. 20

Self
interferennce

PDSCH

PUSCH

# FIG. 21

Interference
occur

| RBs | PUCCH | DATA |
|-----|-------|------|
| RBs | PUSCH | PDSCH |
| RBs | PUCCH | DATA |

Subframe

(a)

Protect
ACK/NACK

| PUCCH | Empty |
|-------|-------|
| PUSCH | PDSCH |
| PUCCH | Empty |

(b)

# FIG. 22

| 3rd subframe | 4th subframe | 5th subframe | 6th subframe | 7th subframe | 8th subframe | 9th subframe | 0th subframe | 1st subframe | 2nd subframe |
|---|---|---|---|---|---|---|---|---|---|
| PUCCH | PUCCH | PUCCH | PUCCH | PUCCH | PUCCH | PUCCH | PUCCH | PUCCH | PUCCH |
| PUSCH | PUSCH | PUSCH | PUSCH | PUSCH | PUSCH | PUSCH | PUSCH | PUSCH | PUSCH |
| PUCCH | PUCCH | PUCCH | PUCCH | PUCCH | PUCCH | PUCCH | PUCCH | PUCCH | PUCCH |

RBs

RBs

RBs

| | | | | Empty | | | | | Empty |
|---|---|---|---|---|---|---|---|---|---|
| PDSCH | PDSCH | PDSCH | PDSCH | PDSCH | PDSCH | PDSCH | PDSCH | PDSCH | PDSCH |
| | | | | Empty | | | | | Empty |

EP 3 094 023 B1

# FIG. 23

| | 3rd subframe | 4th subframe | 5th subframe | 6th subframe | 7th subframe | 8th subframe | 9th subframe | 0th subframe | 1st subframe | 2nd subframe |
|---|---|---|---|---|---|---|---|---|---|---|
| RBs | PUCCH | PUCCH | PUCCH | PUCCH | PUCCH | PUCCH | PUCCH | PUCCH | PUCCH | PUCCH |
| RBs | PUSCH | PUSCH | PUSCH | PUSCH | PUSCH | PUSCH | PUSCH | PUSCH | PUSCH | PUSCH |
| RBs | PUCCH | PUCCH | PUCCH | PUCCH | PUCCH | PUCCH | PUCCH | PUCCH | PUCCH | PUCCH |

| | | | | | | | | | Empty |
|---|---|---|---|---|---|---|---|---|---|
| PDSCH | PDSCH | PDSCH | PDSCH | Empty | PDSCH | PDSCH | PDSCH | PDSCH | Empty |
| | | | | Empty | | | | | Empty |

EP 3 094 023 B1

# FIG. 24

# FIG. 25

UE

BS

2500

2510

2540

2550

2520

Tx module

Tx module

2580

2590

2530

Processor

Memory

Memory

Processor

2560

2570

Rx module

Rx module

# FIG. 26

S2610

Negotiating FDR and CA
are supported or not

S2620

Assigning controll channel
and empty region to SF#N

S2630

Transmitting
resource allocation information

**EP 3 094 023 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130075620 A